# EUROPEAN PATENT SPECIFICATION

(11) **EP 3 853 714 B1**
(45) Date of publication and mention of the grant of the patent: **31.05.2023**
(21) Application number: 19765848.7
(22) Date of filing: 23.08.2019
(51) Int. Cl.: G06F 8/38, G06F 9/451, G06F 16/248, G06F 16/28, G06F 16/332, G06F 16/242, G06F 3/048

(54) **ANALYZING NATURAL LANGUAGE EXPRESSIONS IN A DATA VISUALIZATION USER INTERFACE**
ANALYSE NATÜRLICHER SPRACHÄUSSERUNGEN IN EINER BENUTZERSCHNITTSTELLE ZUR DATENVISUALISIERUNG
ANALYSE D'EXPRESSIONS EN LANGAGE NATUREL DANS UNE INTERFACE UTILISATEUR DE VISUALISATION DE DONNÉES

(30) Priority: 18.09.2018 US 201816134907; 18.09.2018 US 201816134892
(43) Date of publication of application: 28.07.2021
(73) Proprietor: Tableau Software, Inc., Seattle, WA 98103 (US)
(72) Inventor: ERICSON, Jeffrey, Seattle, WA 98103 (US); GOLBABAEI, Sanaz, Seattle, WA 98103 (US); KORNISH, Theodore, Seattle, WA 98103 (US); SETLUR, Vidya, Raghavan, Seattle, WA 98103 (US); DJALALI, Alex, Seattle, WA 98103 (US)
(74) Representative: Mewburn Ellis LLP
(86) International application number: PCT/US2019/047892
(87) International publication number: WO 2020/060720

(56) References cited:
- WO-A1-2018/204696
- US-A1- 2005 015 364
- US-A1- 2015 019 216
- US-A1- 2015 026 153
- US-A1- 2017 083 615
- HOQUE ENAMUL ET AL: "Applying Pragmatics Principles for Interaction with Visual Analytics", IEEE TRANSACTIONS ON VISUALIZATION AND COMPUTER GRAPHICS, IEEE SERVICE CENTER, LOS ALAMITOS, CA, US, vol. 24, no. 1, 1 January 2018 (2018-01-01), pages 309-318, XP011673889, ISSN: 1077-2626, DOI: 10.1109/TVCG.2017.2744684 [retrieved on 2017-12-04]

## Description

### TECHNICAL FIELD

The disclosed implementations relate generally to data visualization and more specifically to systems, methods, and user interfaces that enable users to interact with data visualizations using natural language expressions.

### BACKGROUND

Data visualization applications enable a user to understand a data set visually, including distribution, trends, outliers, and other factors that are important to making business decisions. Some data sets are very large or complex, and include many data fields. Various tools can be used to help a user generate data visualizations for various data sets, but typically require a user to learn a complex user interface. US 2015/019216 A1 discloses various technologies pertaining to performing an operation relative to tabular data based upon voice input. An automatic speech recognition (ASR) system includes a language model that is customized based upon content of the tabular data. The ASR system receives a voice signal that is representative of speech of a user. The ASR system creates a transcription of the voice signal based upon the ASR being customized with the content of the tabular data. The operation relative to the tabular data is performed based upon the transcription of the voice signal. US 2017/083615 A1 discloses a method for including receiving a natural language query from a user with an interface, and generating multiple dependency parses of the natural language query with a parser device connected to the interface. The generating of the multiple dependency parses includes dividing the natural language query into multiple components, and creating a single dependency parse by connecting each component of the components with at least one other component of the components. A processor connected to the parser device applies rules to all of the multiple dependency parses to identify entities and relations in the natural language query. HOQUE ENAMUL ET AL: "Applying Pragmatics Principles for Interaction with Visual Analytics", IEEE TRANSACTIONS ON VISUALIZATION AND COMPUTER GRAPHICS, IEEE SERVICE CENTER, LOS ALAMITOS, CA, US, vol. 24, no. 1, 1 January 2018 (2018-01-01), pages 309-318, evaluates the effectiveness of pragmatics support in Evizeon, a natural language input interface to a data visualization system.

### SUMMARY

The use of natural language expressions to generate data visualizations provides a user with greater accessibility to data visualization features, including updating the fields and changing how the data is filtered. A natural language interface enables a user to develop valuable data visualizations with little or no training.

Accordingly, the present disclosure provides more efficient methods and interfaces for manipulating and generating graphical views of data using natural language inputs. Such methods and interfaces reduce the cognitive burden on a user and produce a more efficient human-machine interface. For battery-operated devices, such methods and interfaces conserve power and increase the time between battery charges. Such methods and interfaces may complement or replace conventional methods for visualizing data. Other implementations and advantages may be apparent to those skilled in the art in light of the descriptions and drawings in this specification.

Some implementations provide for automatically updating related phrases within a natural language expression used to generate a data visualization. For example, when a user changes one phrase in the natural language expression, another phrase of the natural language expression may also need to be updated to avoid raising an error. In some implementations, updating the phrases of the natural language expression results in changing a data visualization representing the data identified by the natural language expression.

In accordance with the claimed invention, a method executes at a computing device coupled with a display. For example, the computing device can be a smart phone, a tablet, a notebook computer, or a desktop computer. The method includes displaying a graphical user interface on the display. The method includes analyzing a natural language input, received from a user, to identify a portion of the natural language input corresponding to a first phrase that includes a first term. The method also identifies a second portion corresponding to a second phrase. The method further includes receiving, from the user, a second input, which modifies the first term in the first phrase. In response to receiving the second input, the method further performs a lookup in a database to determine that the second phrase is dependent on the first term of the first phrase. Updating the second phrase is performed in accordance with a determination that the second phrase is dependent on the first term of the first phrase. In response to a determination that the second phrase is dependent on the first term of the first phrase, the computing device updates the second phrase based on the modification to the first term received in the second input so that an updated natural language expression that comprises the modified first phrase and the updated second phrase is able to be used to generate a data visualization without raising an error condition. In response to updating the second phrase based on the second input, the computing device displays, on the graphical user interface, an updated natural language expression that comprises the modified first phrase and the updated second phrase, and displays an updated data visualization representing the updated natural language expression.

In some implementations, the natural language input is received in a user interface control in the graphical user interface.

In some instances, the natural language input includes two or more distinct phrases.

In some instances, the second input that modifies the first term in the first phrase includes a second term that replaces the first term in the first phrase.

In some instances, the second input that modifies the first term in the first phrase removes the first term in the first phrase.

In some instances, the method further comprises, before receiving the second input, displaying an initial data visualization, distinct from the updated data visualization, according to the first and second phrases.

In accordance with the claimed invention, the method further performs a lookup in a database to determine that the second phrase is dependent on the first term of the first phrase. Updating the second phrase is performed in accordance with a determination that the second phrase is dependent on the first term of the first phrase.

In some instances, the second phrase is a sub-portion of the first phrase, and updating the second phrase based on the second input updates the sub-portion of the first phrase.

In some instances, the first phrase and the second phrase are distinct phrases.

In some instances, updating the second phrase based on the second term removes a third term from the second phrase and adds the second term to the second phrase to replace the third term.

In some instances, updating the second phrase based on the second term removes the second phrase.

In accordance with the invention, a computing device includes one or more processors, memory, a display, and one or more programs stored in the memory. The programs are configured for execution by the one or more processors. The one or more programs include instructions for performing any of the methods described herein.

In accordance with the invention, a non-transitory computer readable storage medium stores one or more programs configured for execution by a computing device having one or more processors, memory, and a display. The one or more programs include instructions for performing any of the methods described herein.

Thus methods, systems, and graphical user interfaces are disclosed that enable users to easily build and update data visualizations using natural language commands.

### BRIEF DESCRIPTION OF THE DRAWINGS

For a better understanding of the disclosed systems, methods, and graphical user interfaces, as well as additional systems, methods, and graphical user interfaces that provide natural language interfaces, reference should be made to the Description of Implementations below, in conjunction with the following drawings, in which like reference numerals refer to corresponding parts throughout the figures.
Figure 1 is a graphical user interface according to some implementations.
Figure 2 is a block diagram of a computing device according to some implementations.
Figures 3A - 3F provide a series of screen shots for a graphical user interface for updating a natural language input according to some implementations.
Figures 4A - 4E provide a series of screen shots for a graphical user interface for updating data visualizations based on changes to natural language input according to some implementations.
Figures 5A - 5D illustrate updating filters specified in a natural language input according to some implementations.
Figures 6A and 6B provide a flowchart of a process for displaying an updated data visualization according to some implementations.
Figure 7 provides a flowchart of a process for updating data filters according to some implementations.
Figures 8A - 8J illustrate widgets used in a natural language interface according to some implementations.

Reference will now be made to implementations, examples of which are illustrated in the accompanying drawings. In the following description, numerous specific details are set forth in order to provide a thorough understanding of the present invention. However, it will be apparent to one of ordinary skill in the art that the present invention may be practiced without requiring these specific details.

### DESCRIPTION OF IMPLEMENTATIONS

Some methods and devices described in the present specification improve upon data visualization methods by automatically updating natural language inputs used to generate data visualizations. Such methods and devices reduce the burden on the user by providing quicker and easier access to a data visualization without the need to manually update every related phrase in the natural language input. When a user modifies a portion of the natural language input without updating related portions of the input, it could trigger an error condition instead of an updated data visualization. In some implementations, when a user modifies a portion of the natural language input, another portion of the natural language input, such as a filter, also needs to be updated. This requires a user to understand the dependencies of different portions of the natural language input. Methods and devices described herein automatically update natural language expressions so that when a user changes one portion of the input, the related portions of the input are automatically detected and updated.

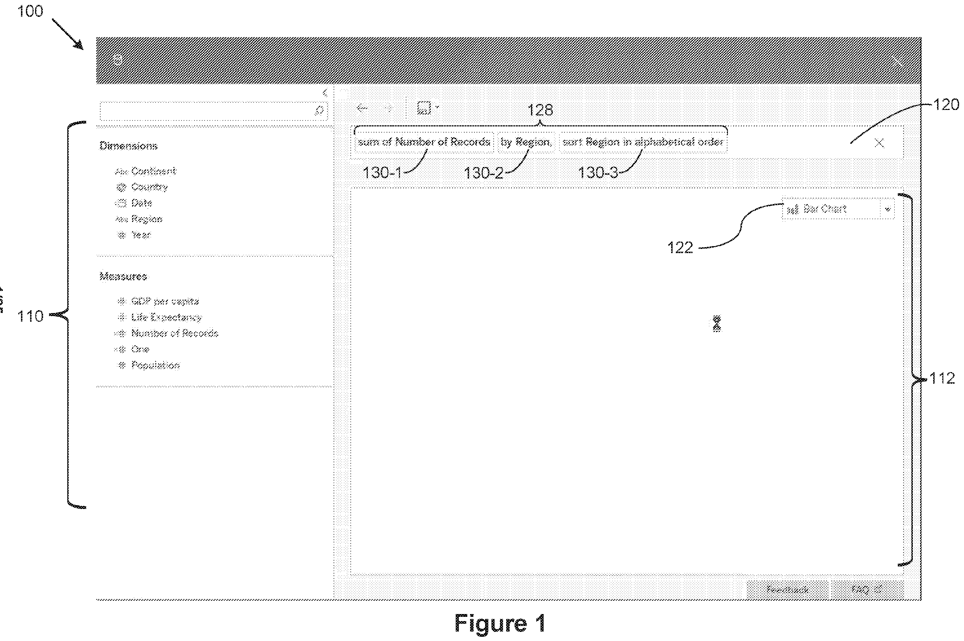

Figure 1 shows a graphical user interface 100 for interactive data analysis. The user interface 100 displays a schema information region 110, which is also referred to as a data pane. The schema information region 110 provides data fields that may be selected and used to build a data visualization. In some implementations, the data fields of a schema are separated into a group of dimensions (e.g., categorical data) and a group of measures (e.g., numeric quantities) in the schema information region 110. The user interface 100 displays a user interface control 120. In some implementations, the user interface control 120 receives and/or displays a natural language input 128 (e.g., expression) from a user. In some implementations, the graphical user interface 100 includes a data visualization region 112 for displaying the data visualization generated based on the input 128 in user interface control 120.

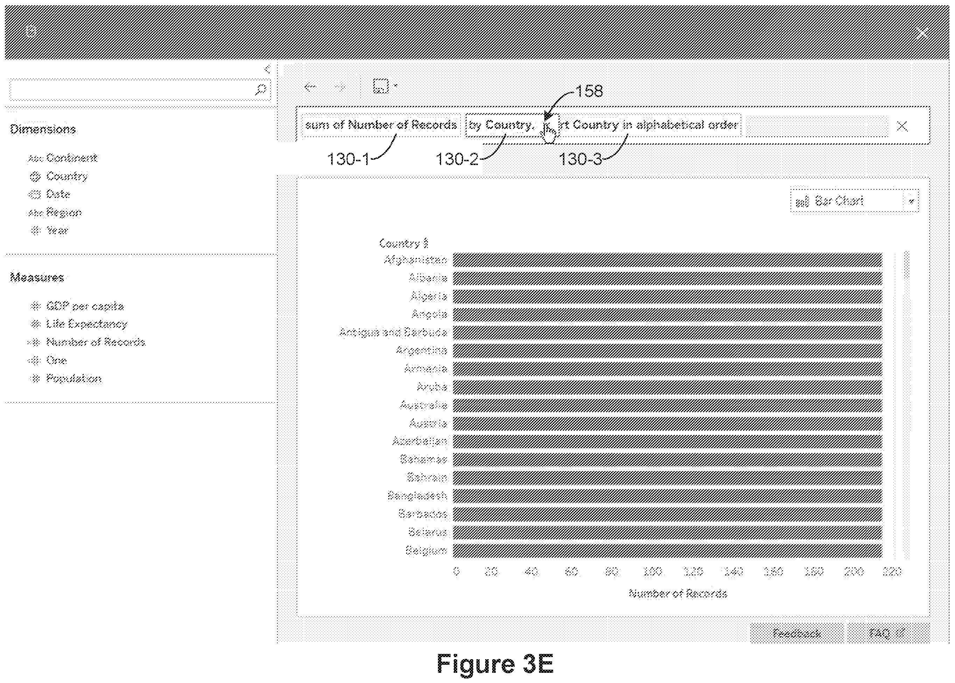

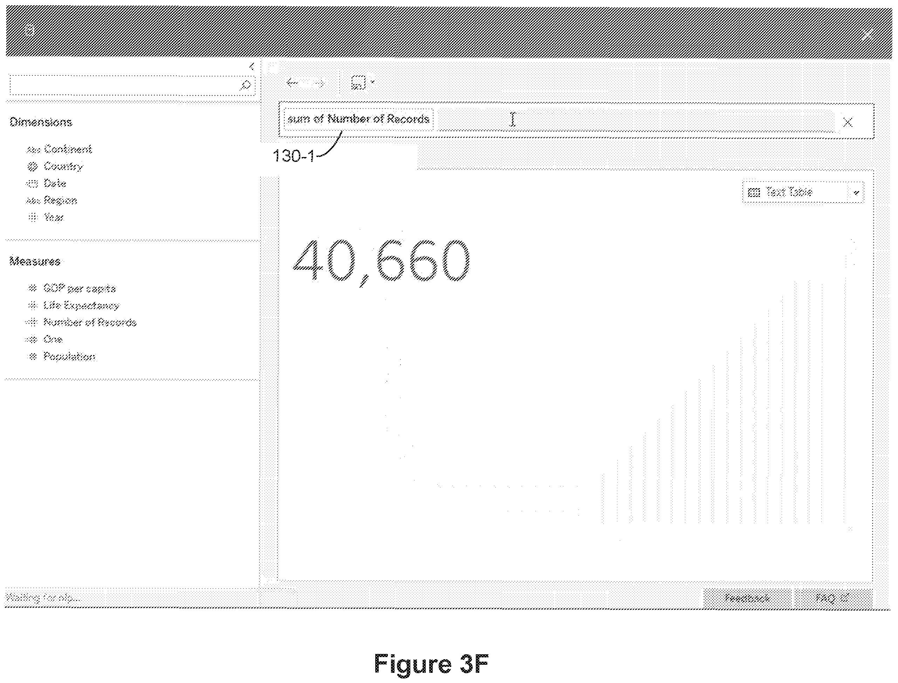

In some implementations, the type of data visualization may be changed by using a view type selector 122. For example, the view type of the data visualization selected in Figure 1 is "Bar Chart." Additional view types of data visualizations are available, such as a "map," "line chart," "pie chart," "scatter plot," "text table," and "treemap." In some implementations, the data visualization is generated according to a default view type based on the input. In some implementations, the default view type is selected based on a top-ranked visualization type as determined according to data types of the user-selected data fields and/or data values for the user-selected data fields, as described in U.S. Patent No. 8, 099,674 and U.S. Patent No. 9,424,318, each of which is incorporated by reference in its entirety. For example, when the input is modified, a different type of data visualization is displayed (e.g., as explained with reference to Figures 3E and 3F, where the data visualization type changes from "bar chart" to "text table"). In some implementations, a user specifies the data visualization type as part of the natural language input in the user interface control 120. For example, a user may input (e.g., type in control 120) an additional phrase that specifies "in a bar chart." For example, the computing device may parse the user input "in a bar chart" and update the view type selector to the "bar chart" option.

In some implementations, in response to the type of data visualization being selected from view type selector 122, the computing device displays a phrase in the natural language control 120 that includes the data visualization type. For example, the computing device appends "in a bar chart" to the natural language expression in response to user selection, in the view type selector 122, of a "bar chart."

In some implementations, only view types that make sense for the current expression are provided as options to the user. For example, suppose a user inputs (e.g., types into the natural language control 120) "in a map," but the natural language expression 128 does not include phrases that are not consistent with a map data visualization, the computing device, after parsing the user's natural language input, sets the view type selector 122 to a default data visualization type and does not include a "map" view type option in the dropdown of view type selector 122. For example, the dropdown of view type selector 122 only includes visualization types that make sense based on the natural language input 128.

In some implementations, a data field may be designated as a dimension or as a measure in the database itself (e.g., if the data source is a cube data source). In other implementations, a data visualization application 222 automatically assigns a default role to each data field, which is either a measure or a dimension based on the data type of the data field. For example, numeric fields by default are used as measures, whereas non-numeric fields (e.g., text fields and date fields) by default are used as dimensions. A user can override the assigned default role when appropriate. For example, a numeric "ID" field may be initially classified as a measure, but a user may reclassify the "ID" field as a dimension.

A dimension is a data field that organizes data into categories (also referred to as "buckets"). For example, if a data source includes data associated with the "United States" and the data source includes a data field corresponding to "State," the "State" is used as a dimension. Each dimension creates distinct divisions within a data visualization, such as separate bars in a bar chart (e.g., a separate bar for each state). These divisions are typically labeled with dimension headers, with one header for each corresponding dimension value (e.g., each bar may be labeled with the name of the corresponding state).

A measure is a data field that is used to measure something, such as sales amount, profit, or order quantity, and is typically continuous. For example, whereas the dimension 'State' has a fixed set of discrete possible values, a `Sales Amount' data field can have any value within a large range. A significant number of records could include a variety of small sales amounts correlating to lower-priced items and many other records may include larger amounts of sales for higher-priced items. Each measure is typically aggregated to a single value (e.g., by default measures are summed) at a level of detail (grouping) according to the selected dimensions (e.g., sales may be aggregated by state).

As illustrated in Figure 1, the natural language input control 120 is used to input and display a natural language expression 128. The natural language processor 228 has parsed the expression 128 into three distinct phrases 130-1, 130-2, and 130-3. In some instances, one or more of the phrases consists of sub-phrases.

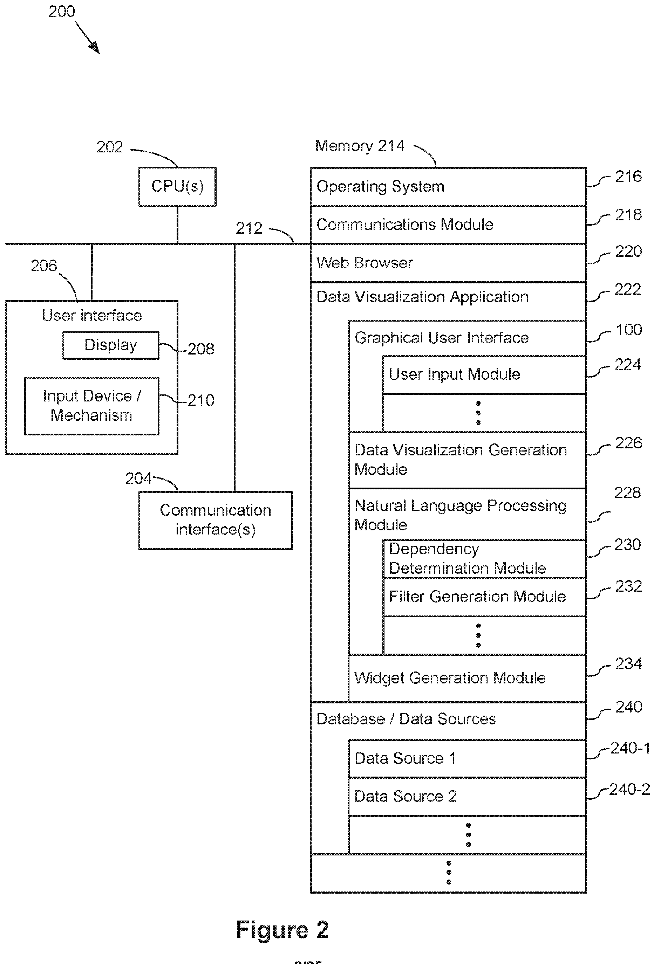

Figure 2 is a block diagram illustrating a computing device 200 that can display the graphical user interface 100 in accordance with some implementations. Various examples of the computing device 200 include a desktop computer, a laptop computer, a tablet computer, and other computing devices that have a display and a processor capable of running a data visualization application 222. The computing device 200 typically includes one or more processing units/cores (CPUs) 202 for executing modules, programs, and/or instructions stored in the memory 214 and thereby performing processing operations; one or more network or other communications interfaces 204; memory 214; and one or more communication buses 212 for interconnecting these components. The communication buses 212 may include circuitry that interconnects and controls communications between system components.

The computing device 200 includes a user interface 206 comprising a display device 208 and one or more input devices or mechanisms 210. In some implementations, the input device/mechanism includes a keyboard. In some implementations, the input device/mechanism includes a "soft" keyboard, which is displayed as needed on the display device 208, enabling a user to "press keys" that appear on the display 208. In some implementations, the display 208 and input device / mechanism 210 comprise a touch screen display (also called a touch sensitive display).

In some implementations, the memory 214 includes high-speed random access memory, such as DRAM, SRAM, DDR RAM or other random access solid state memory devices. In some implementations, the memory 214 includes non-volatile memory, such as one or more magnetic disk storage devices, optical disk storage devices, flash memory devices, or other non-volatile solid state storage devices. In some implementations, the memory 214 includes one or more storage devices remotely located from the CPU(s) 202. The memory 214, or alternatively the non-volatile memory device(s) within the memory 214, comprises a non-transitory computer-readable storage medium. In some implementations, the memory 214, or the computer-readable storage medium of the memory 214, stores the following programs, modules, and data structures, or a subset thereof:
- an operating system 216, which includes procedures for handling various basic system services and for performing hardware dependent tasks;
- a communications module 218, which is used for connecting the computing device 200 to other computers and devices via the one or more communication network interfaces 204 (wired or wireless) and one or more communication networks, such as the Internet, other wide area networks, local area networks, metropolitan area networks, and so on;
- a web browser 220 (or other application capable of displaying web pages), which enables a user to communicate over a network with remote computers or devices;
- a data visualization application 222. In some implementations, the data visualization application 222 also includes:
   o a graphical user interface 100 for a user to construct visual graphics. In some implementations, the graphical user interface includes a user input module 224 for receiving user input, through a natural language control 120. For example, a user inputs a natural language expression 128 (e.g., via the control 120), identifying one or more data sources 240 (which may be stored on the computing device 200 or stored remotely) and/or data fields from the data source(s). The selected fields are used to define a visual graphic. The data visualization application 222 then displays the generated visual graphic in the user interface 100. In some implementations, the data visualization application 222 executes as a standalone application (e.g., a desktop application). In some implementations, the data visualization application 222 executes within the web browser 220 or another application using web pages provided by a web server;
   o a data visualization generation module 226, which takes the user input (e.g., the natural language input), and generates a corresponding visual graphic (also referred to as a "data visualization" or a "data viz");
   o a natural language processor 228, which receives and parses the natural language input provided by the user. The natural language processor 228 may also include a dependency determination module 230, which looks up dependencies in a database 240 to determine how particular terms and/or phrases are related (e.g., dependent). In some implementations, the natural language processor 228 includes a filter generation module 232, which determines if one or more filters are related to a field that has been modified by a user. The filter generation module 232 generates the one or more filters based on a change to the field;
   o a widget generation module 234, which generates widgets that include user-selectable options. For example, a "sort" widget is generated in response to a user selecting (e.g., hovering) over a sort field (e.g., a natural language term identified to be a sort field). The sort widget includes user-selectable options such as "ascending," "descending," and/or "alphabetical," so that the user can easily select, from the widget, how to sort the selected field.
- zero or more databases or data sources 240 (e.g., a first data source 240-1 and a second data source 240-2), which are used by the data visualization application 222. In some implementations, the data sources are stored as spreadsheet files, CSV files, XML files, flat files, or JSON files, or stored in a relational database.

Each of the above identified executable modules, applications, or sets of procedures may be stored in one or more of the memory devices, and corresponds to a set of instructions for performing a function described above. The above identified modules or programs (i.e., sets of instructions) need not be implemented as separate software programs, procedures, or modules, and thus various subsets of these modules may be combined or otherwise re-arranged in various implementations. In some implementations, the memory 214 stores a subset of the modules and data structures identified above. Furthermore, the memory 214 may store additional modules or data structures not described above.

Although Figure 2 shows a computing device 200, Figure 2 is intended more as a functional description of the various features that may be present rather than as a structural schematic of the implementations described herein. In practice, and as recognized by those of ordinary skill in the art, items shown separately could be combined and some items could be separated.

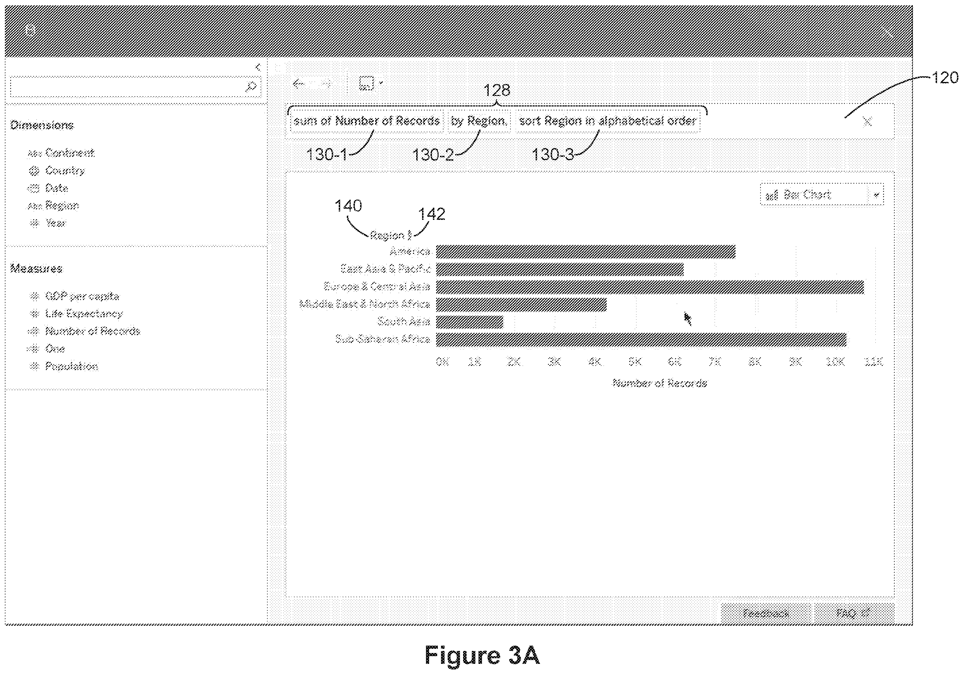

Figures 3A - 3F provide a series of screen shots for a graphical user interface 100. A user can interact with the natural language control 120 to update the expression 128. The natural language expression 128 in Figure 3A includes three distinct phrases 130-1, 130-2, and 130-3. Each phrase is separately identified (e.g., within a separate text box), including: "sum of Number of Records" 130-1, "by Region" 130-2 (e.g., where "by" denotes a Group By function), and "sort Region in alphabetical order" 130-3. Typically, each phrase 130 includes one or more terms that identify data fields from a data source 240. A term may be a dimension or a measure. The natural language input may include more than one term. As shown in Figure 3A, an initial data visualization representing the natural language input is displayed in the graphical user interface. For example, Figure 3A shows a bar chart representing the number of records by region sorted in alphabetical order. The "Region" column header 140 indicates that each row of the bar chart corresponds to a region, and the sort indicator 142 indicates that the rows are currently sorted in alphabetical order (as specified by the third phrase 130-3).

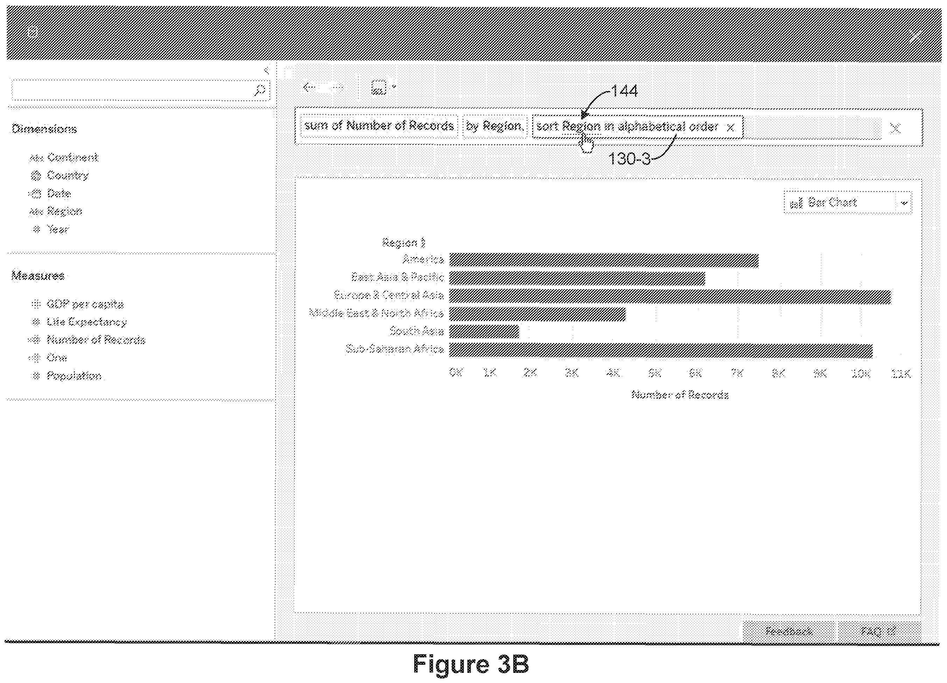

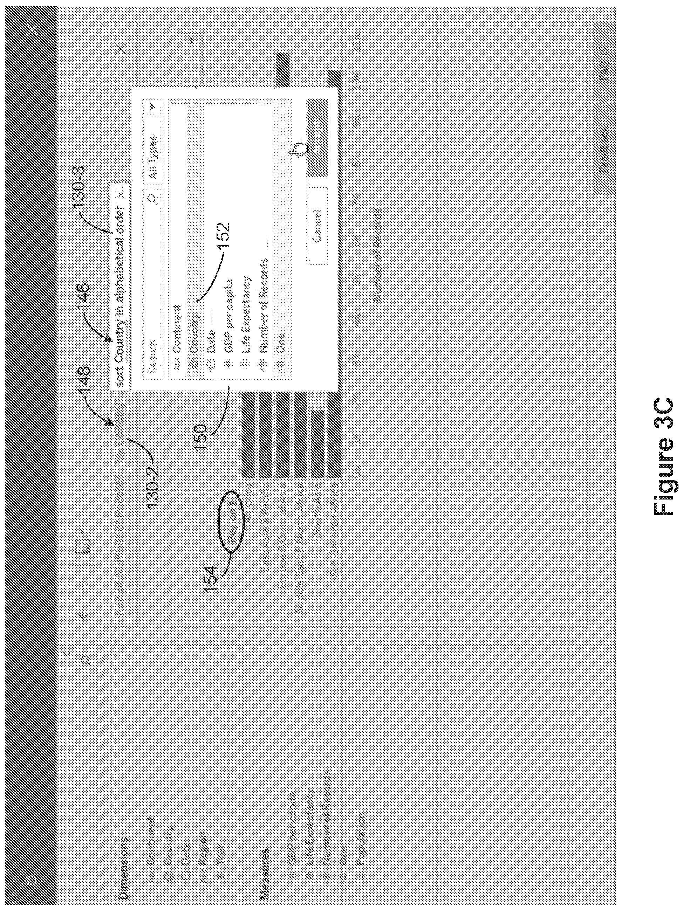

In some instances, a user selects (e.g., via a mouse click, hover, or other input) a first term in the natural language expression. For example, Figure 3B illustrates a user hovering over the term "Region" 144 in the third phrase "sort Region in alphabetical order" 130-3. In some implementations, in response to the user selection, the term is visually distinguished within the natural language input. For example, the selected term "Region" 144 is underlined in response to the user hovering over the term. In some implementations, in response to the user selection, a widget is generated (e.g., using the widget generation module 234), as shown in Figure 3C. For example, the widget 150 prompts the user with user-selectable options (e.g., including alternative terms) to replace the selected term 144. The user in Figure 3C selects the "Country" option 152 from the widget. In response to the user's selection, the first term "Region" 144 is replaced with the selected term "Country" 146 in the third phrase "sort [term] in alphabetical order" 130-3.

In some instances, a second phrase (or a term within a second phrase) is dependent on the edited phrase (or the edited term within the edited phrase). For example, the second phrase "by Region" 130-2 is dependent on the third phrase "sort Region in alphabetical order" 130-3 because the sorting field must be compatible with the grouping field. In some implementations, the dependency of terms and/or phrases is determined by performing a lookup in a database storing data and information on how the data is related. In some instances, phrases that include an overlapping term are dependent phrases. For example, where both phrases use the term "Region," the computing device may determine that the phrases are dependent phrases. Here, when the user replaces the term "Region" with "Country" in the third phrase 130-3, if the second phrase "by Region" 130-2 were not updated, the computing device would raise an error. The system cannot sort by Country when the requested data has not been grouped by country. Instead of raising an error, the computing device automatically determines that the second phrase "by Region" 130-2 must also be updated in order to prevent returning an error based on the user input. This improves the user experience because the user is not required to manually update the second phrase in order to prevent the error.

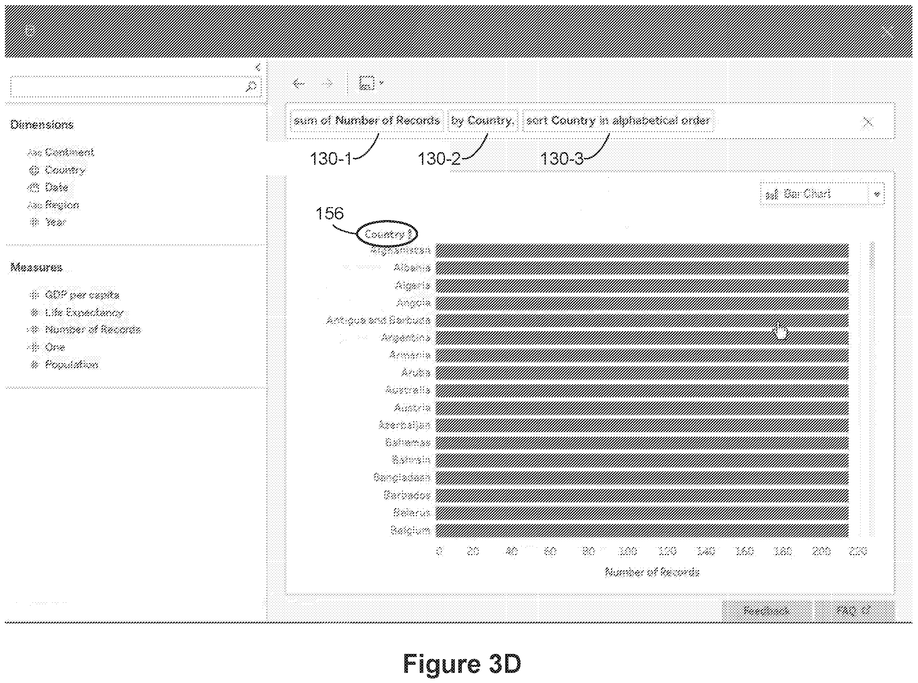

In accordance with a determination that the second phrase is dependent on the third phrase, the user's input to replace the term "Region" 144 with the term "Country" 146 in the third phrase also causes the computing device to update the second phrase 130-2, replacing "Region" with "Country" 148. The second phrase is updated by the computing device automatically without user input (e.g., the user does not manually change "by Region" to "by Country" after modifying the first term). Note that the column header and sort indicator 154 are not yet updated in Figure 3C because the change has not yet been committed. The resulting updated natural language expression is shown in Figure 3D. Further, Figure 3D illustrates an updated data visualization representing the updated natural language expression, now sorting the bars in the bar chart by country in alphabetical order, as indicated by the updated column header and sort indicator 156.

Figures 3E and 3F illustrate another example of a user input modifying a term in a phrase, which causes the device to update another phrase (e.g., that is dependent on the first phrase). For example, the user input in Figure 3E illustrates a user hovering over the second phrase "by Country" 130-2. In some implementations, the phrases in the natural language expression are removable (e.g., may be deleted) by a user input selecting an "x" option 158 (e.g., illustrated in Figure 3E with a user input indication hovering over the "x" option 158). For example, the "x" option 158 is dynamically generated in response to a user input (e.g., hover) over the text box that includes the phrase. In this example, the computing device determines that the second phrase "by Country" 130-2 and the third phrase "sort Country in alphabetical order" 130-3 are dependent on each other. Figure 3E illustrates an initial data visualization of a bar chart representing a number of records grouped by country and sorted in alphabetical order.

The user input modifies the second phrase 130-2 by removing the second phrase from the natural language expression 128. In response to removing the second phrase "by Country" 130-2, the computing device updates the third phrase "sort Country in alphabetical order" 130-3 by removing the third phrase. The resulting updated natural language expression is shown in Figure 3F. As shown in the Figure, the second phrase "by Country" 130-2 is removed and the third phrase "sort Country in alphabetical order" 130-3 is automatically removed by the computing device without user input. For example, the user only selected the "x" option 158 for the second phrase, and the computing device, determining that the third phrase is dependent on the second phrase, automatically removed the third phrase instead of raising an error. Thus, the user did not need to manually remove the third phrase in order to fix the expression. Figure 3F also shows the updated data visualization corresponding to a text table representing the phrase 130-1, "sum of Number of Records." Because there is no data field to specify grouping, all of the rows of data are grouped together to create a single total.

As illustrated by the examples above, the computing device determines how a first phrase is modified by a user and updates one or more dependent phrases based on the modification. In some implementations, the computing device updates a term of a second phrase based on a modification to a first phrase. In some implementations, the computing device removes the second phrase based on modification to the first phrase.

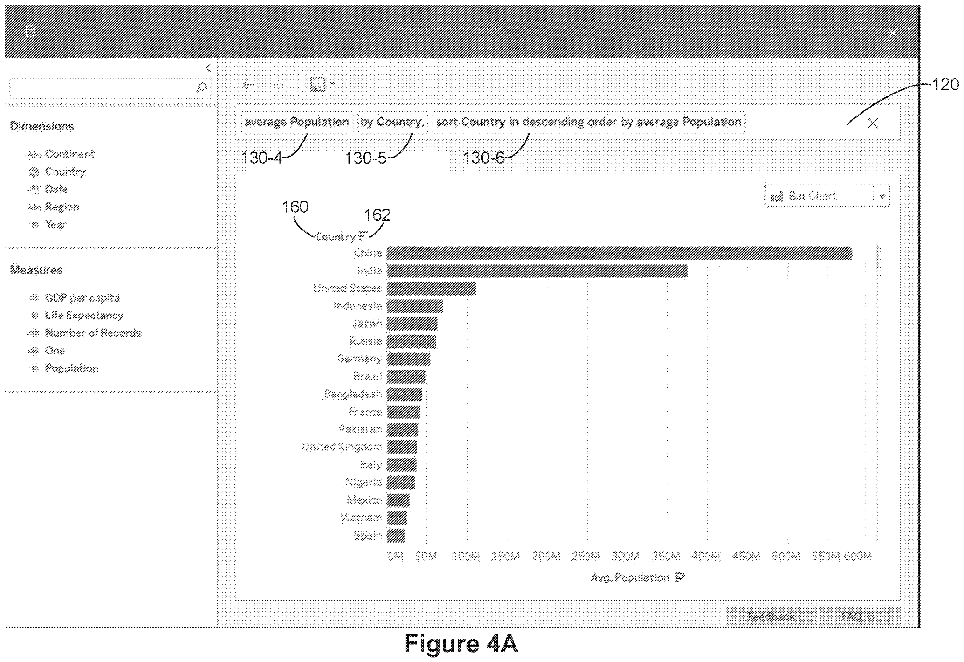

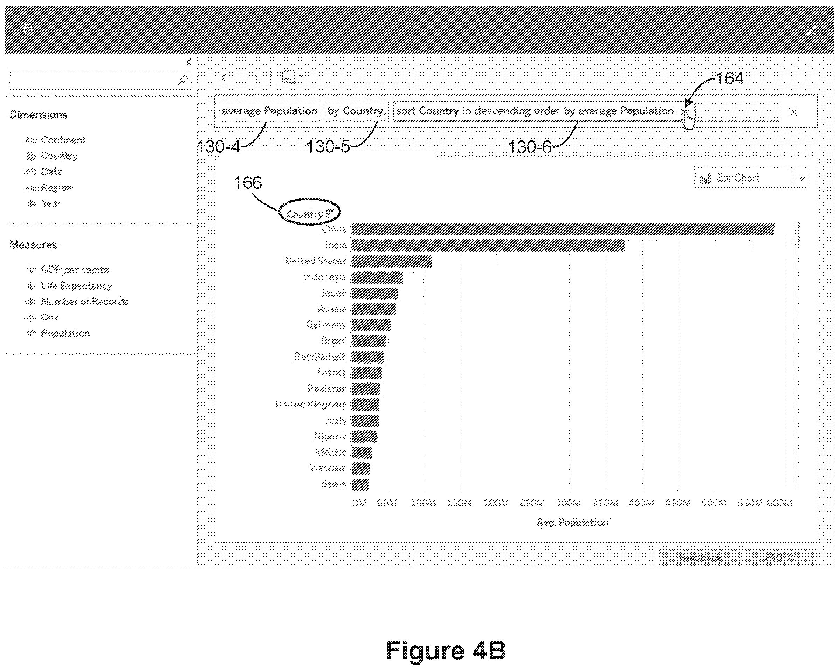

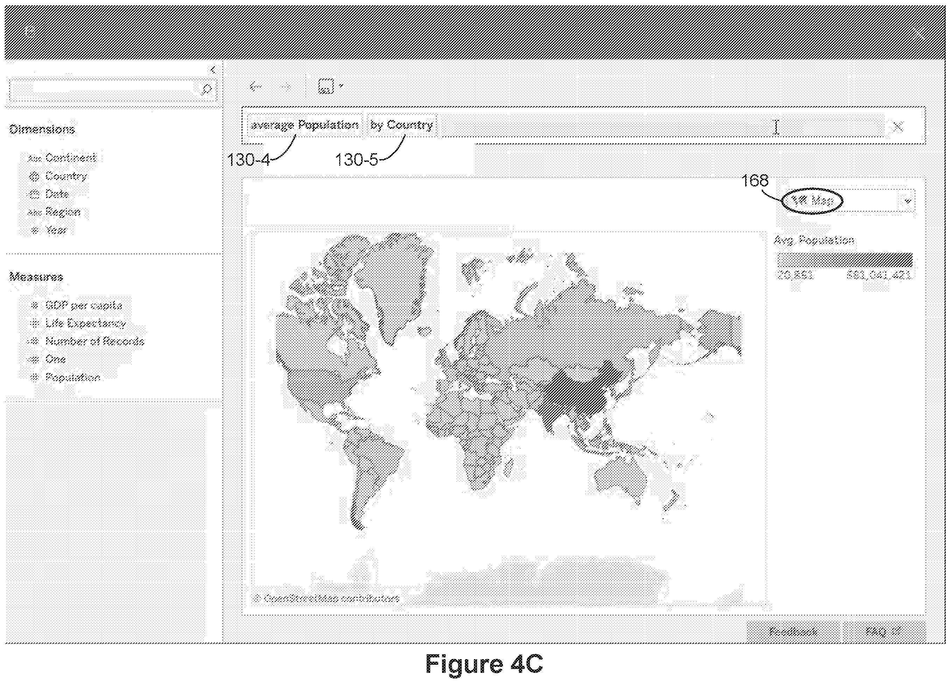

Figures 4A - 4E provide a series of screen shots for a graphical user interface 100, which updates the view type of the data visualization based on changes to natural language input. In some implementations, the computing device automatically generates (e.g., using the data visualization generation module 226) a type of data visualization based on the natural language input. In some implementations, a modification (e.g., received from a user input) to the natural language input (e.g., via a natural language control 120) causes the computing device to change the type of data visualization presented to the user. For example, in Figure 4A, the natural language input includes three distinct phrases: "average Population" 130-4, "by Country" 130-5, and "sort Country in descending order by average Population" 130-6. The view type of the data visualization is a bar chart. As indicated by the column header 160, the bar chart has bars for each country, and the sort indicator 162 illustrates that the data is sorted in descending order. Figure 4B illustrates a user input (e.g., hovering) on the third phrase 130-6 "sort Country in descending order by average Population." In response to the user hovering on the phrase 130-6, the computing device dynamically generates an "x" option 164, which the user can select to remove the phrase 130-6. In response to the user removing the third phrase (e.g., by selecting the "x" option 164) in the natural language input, the computing device determines that without the phrase that includes "sort", a default type of data visualization should be a map. This works because the natural language input only includes the two phrases "average Population" 130-4 and "by Country" 130-5. This is shown in Figure 4C. In some implementations, a user can change the data visualization from the default type of data visualization. For example, the default type of data visualization "map" is shown in the dropdown control 168. Alternative types of data visualization are presented to the user via the dropdown control 168 so that a user can modify the type of data visualization shown in the graphical user interface.

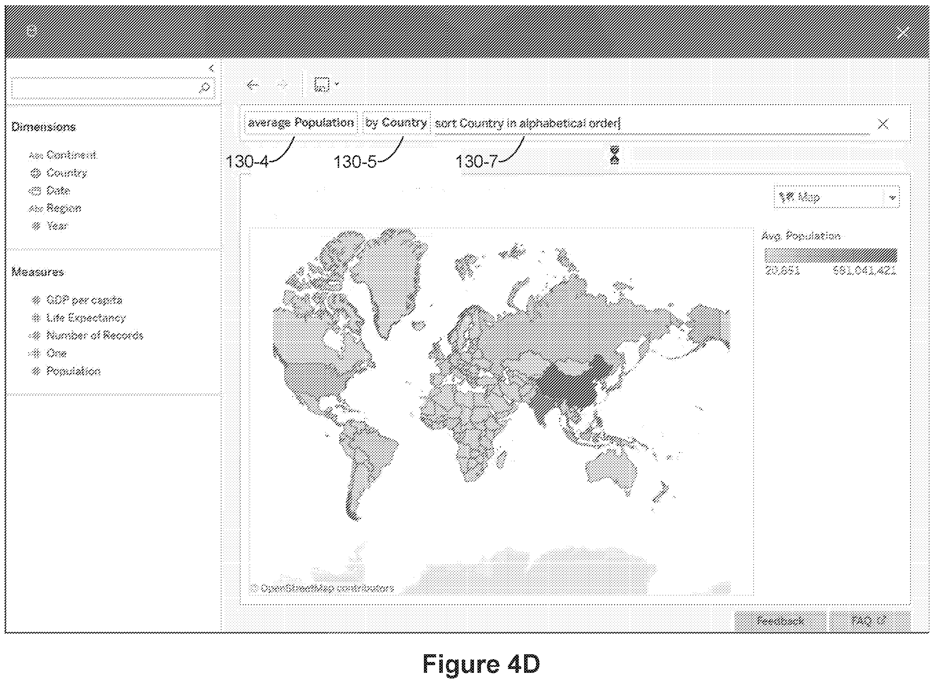

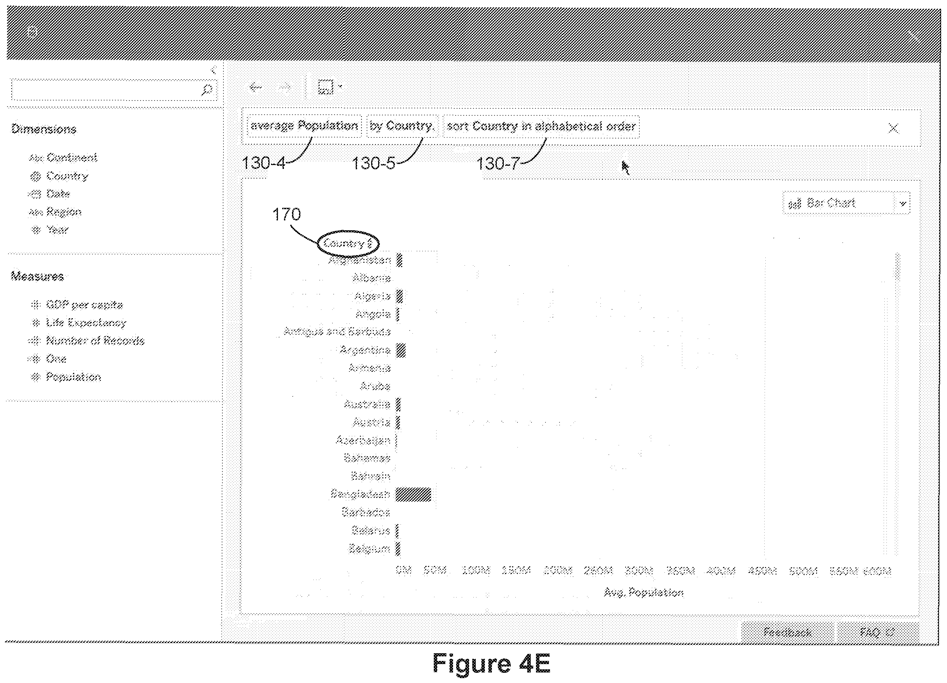

Figure 4D shows another example of updating the data visualization. In Figure 4D, a user inputs (e.g., by typing) an additional phrase 130-7 into the natural language input (e.g., via the natural language input control 120). In response to receiving the user input, Figure 4E illustrates that the computing device changes the data visualization from the map view in Figure 4D to a bar chart view in Figure 4E. The bar chart in Figure 4E represents the updated natural language expression, showing the average population by country sorted by the country in alphabetical order. The column header and sort indicator 170 illustrate that each row of the bar chart corresponds to a Country and the rows are sorted in alphabetical order (e.g., as specified by the additional phrase 130-7).

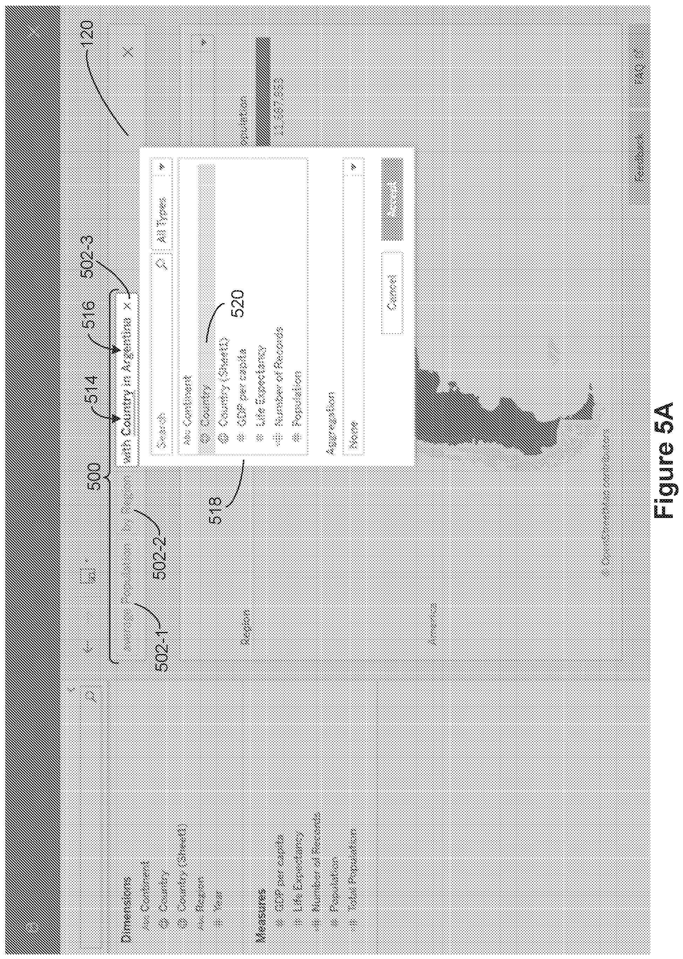

Figures 5A - 5D illustrate updating filters in a natural language expression 500 according to some implementations. Figure 5A illustrates a natural language input 500 that has three phrases 502-1, 502-2, and 502-3, each corresponding to a data field. A filter phrase (such as the third phrase 502-3) compares a data field to a specific value or another data field, such as [data field] [relation] [comparison value]. The most common relations are =, ≠, >, ≥, <, and ≤. In some instances, a phrase 502 of the natural language input 500 follows a natural language template (e.g., stored in a database at the computing device). Based on the natural language template and natural language processing, the computing device determines how to update (e.g., or automatically complete) the phrase based on the user input. For example, when a first term of the phrase is a category, the template identifies that a categorical filter is proper to update the phrase. As another example, when a first term of the phrase is a numeric data field, the template identifies that a quantitative filter is proper to update (e.g., complete) the phrase.

In some implementations, user input (e.g., hovering) within the user interface control 120 selects the term "Country" 514. In response to the user hovering over the term (e.g., data field) "Country" 514 the computing device automatically (e.g., without user input) correlates the partial input with a template phrase, and sets a default value (e.g., "Argentina" 516) for a second template field for the phrase. In particular, the computing device determines that the user has selected a dimension (the data field "Country" 514), which requires a categorical value for comparison. The default comparison value is a data value for the Country data field 514. In this way, selection of the data field "Country" 514 causes the computing device to complete the phrase template with "Argentina" 516. These actions occurred before the screen shot in Figure 5A. As shown in Figure 5A, a data visualization of a map is shown in the graphical user interface (the map is partially hidden behind the drop-down widget 518), which reflects filtering the Country 514 to "Argentina" 516.

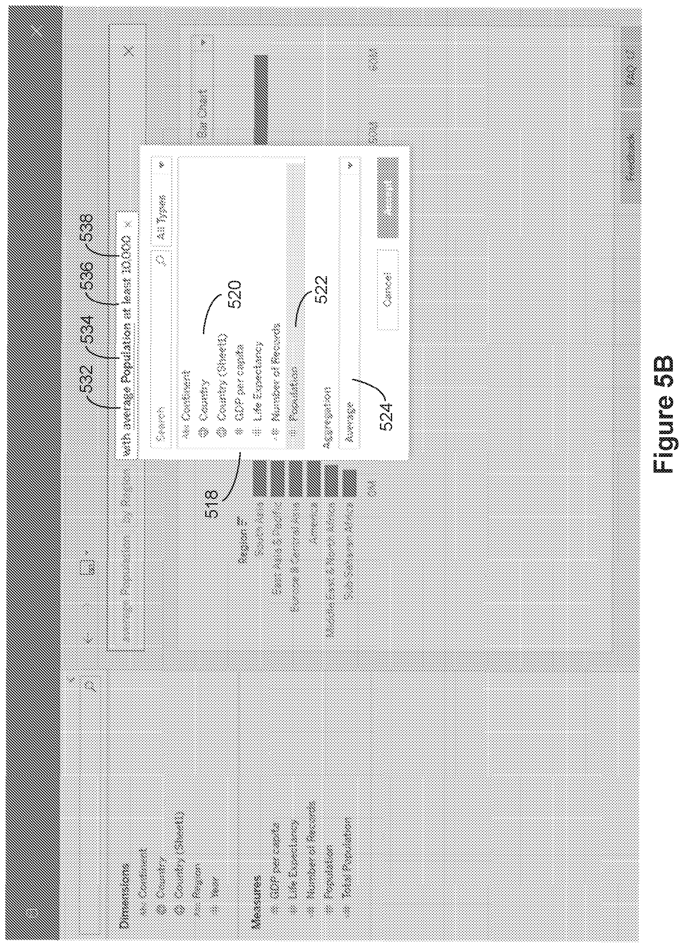

In Figure 5A, the user has taken another action (e.g., clicking on the Country term 514) to open the data field selection widget 518. As shown in Figure 5A, the Country field option 520 is currently selected. Based on a filter for Country 514, a comparison value of "Argentina" 516 makes sense. However, once the user selects the Population option 522 in Figure 5B, comparing Population to the string "Argentina" no longer makes sense.

In Figure 5B, the user input (e.g., hovering) within the widget 518 selects the term "Population" 522. The computing device determines that the selected term is quantitative. In response to the user input, the computing device automatically updates the comparison operator 536 (e.g., to "at least" or "≥") and the comparison value 538 for the phrase 502-3. In this example, the computing device completes the phrase with a comparison value of 10,000. For a quantitative data field such as Population 534, an aggregation type must also be selected (e.g., SUM, COUNT, or AVERAGE). In this example, the aggregation type defaults to Average 524, which is displayed as the aggregation type 532 in the third phrase 502-3. In some implementations, the aggregation type defaults to what is already specified in other phrases (e.g., the "Average Population" in the first phrase 502-1). Further, an updated data visualization corresponding to a bar chart is displayed on the graphical user interface based on the updated phrase.

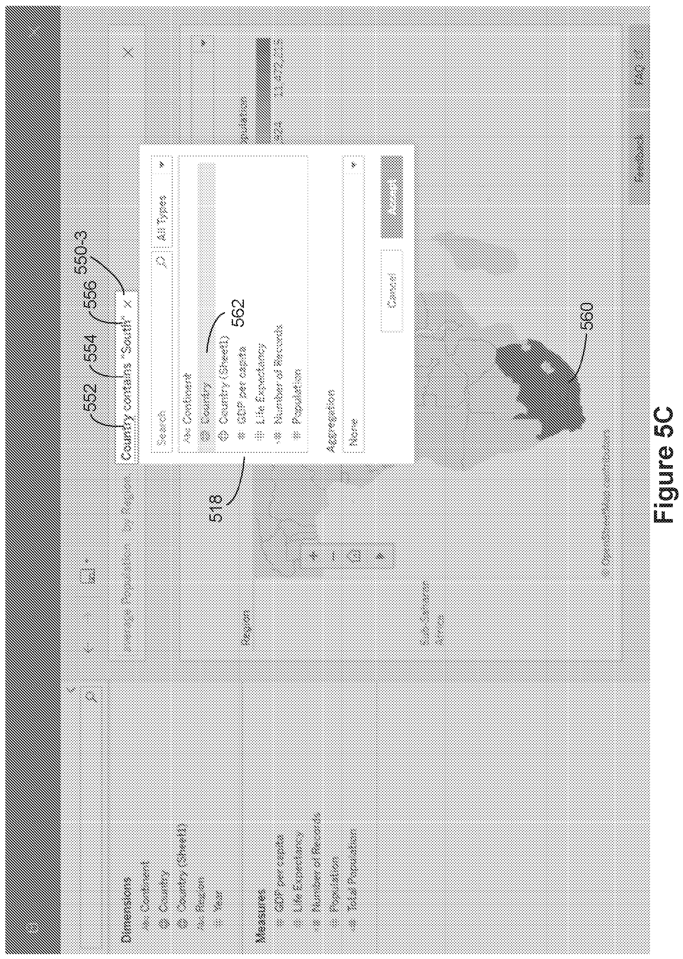

Figure 5C illustrates a natural language input including the third phrase "Country contains 'South'" 550-3, which has a first data field "Country" 552. The comparison operator 554 is "contains", and the comparison value is "South" 556. In this case, the third phrase 550-3 specifies a filter that limits the data to those whose country names include the text string "South" 556. As shown in the data visualization, the map is showing "South Africa" 560. In Figure 5C, the user has taken action to bring up the filter widget 518, and the Country option 562 is selected.

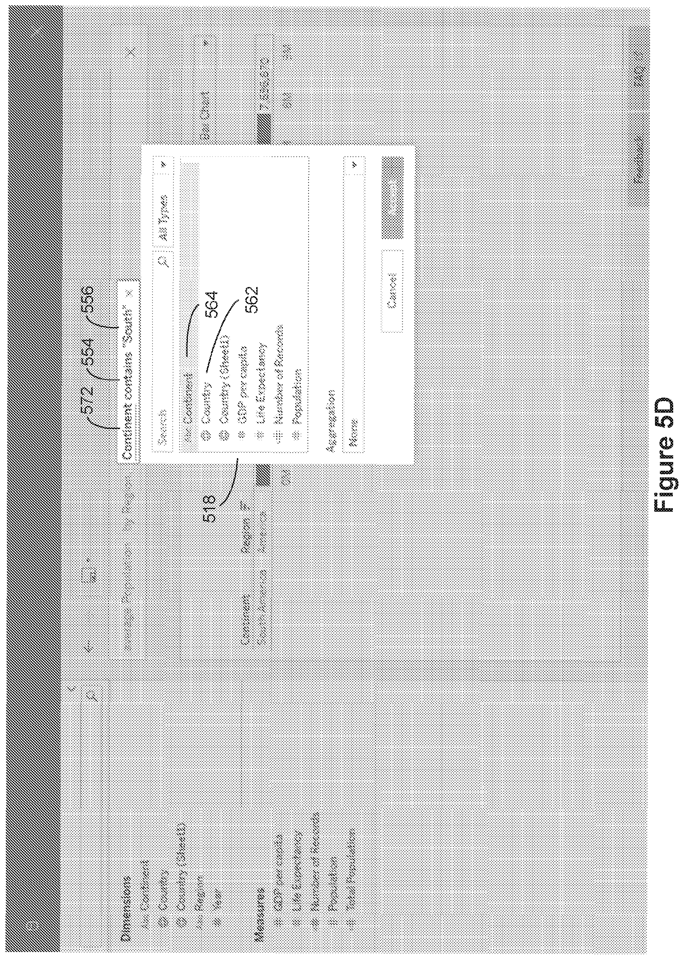

Figure 5D shows user input switching from the "Country" option 562 to the "Continent" option 564. The computing device determines that both "Country" and "Continent" store categorical data. Thus, the computing device retains the comparison operator 554 and the comparison value 556 for the categorical filter. The categorical filter is still a proper filter (e.g., it does not raise an error) based on the selected new data field "Continent" 572.

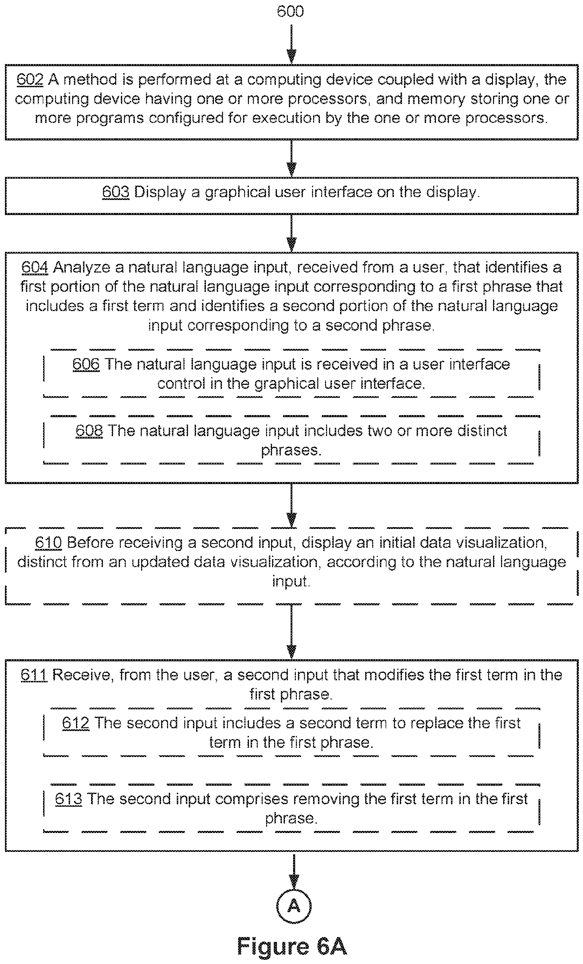

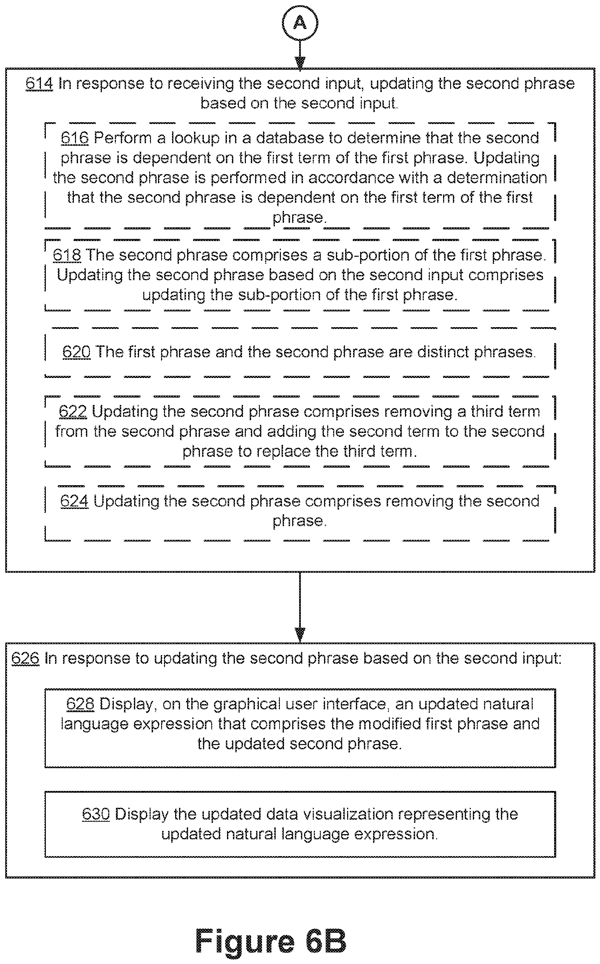

Figures 6A and 6B illustrate a method 600 of displaying a data visualization according to a natural language expression. The method 600 is also called a process. The method is executed at and performed by a computing device (602) coupled with a display, the computing device having one or more processors, and memory storing one or more programs configured for execution by the one or more processors. The method 600, as performed by a computing device, is optionally governed by instructions that are stored in a non-transitory computer readable storage medium. The instructions are executed by one or more processors of the computing device. Each of the operations shown in Figures 6A and 6B may correspond to instructions stored in computer memory or a non-transitory computer readable storage medium (e.g., the memory 214 of a computing device 200). The computer readable storage medium may include a magnetic or optical disk storage device, solid state storage devices such as Flash memory, or other non-volatile memory device or devices. The instructions stored on the computer readable storage medium may include one or more of: source code, assembly language code, object code, or other instruction format that is interpreted by one or more processors. Some operations in the method 600 may be combined and/or the order of some operations may be changed.

The computing device displays (603) a graphical user interface on the display. For example, the computing device displays the graphical user interface 100 illustrated in Figure 1.

The computing device analyzes (604) a natural language input, received from a user, to identify a portion of the natural language input corresponding to a first phrase that includes a first term. In some implementations, the natural language input is received (606) in a user interface control 120 in the graphical user interface 100. In some implementations, at least a portion of the natural language input is typed by a user. In some implementations, at least a portion of the natural language input is selected, by the user, from a plurality of options provided by the computing device. In some implementations, only a portion of the natural language input is received from the user and the natural language input is automatically completed by the computing device (e.g., the computing device predicts and/or suggests how to complete the natural language input). For example, the user may input (e.g., type) "sum of Number of Records," "by Region" and "sort," and the computing device will complete the natural language input, based on the user input, with a default phrase (e.g., "Region in alphabetical order). In some implementations, the natural language input includes (608) two or more distinct phrases. For example, the natural language input (e.g., expression) shown in Figure 1 comprises three distinct phrases: "sum of Number of Records", "by Region", and "sort Region in alphabetical order." In some implementations, the graphical user interface 100 distinguishes between the two or more distinct phrases by displaying each phrase in a separate user interface element (e.g., a text box).

In some implementations, before receiving a second input, the computing device displays (610) an initial data visualization, distinct from an updated data visualization, according to the natural language input. For example, the data visualization (e.g., bar chart) shown in Figure 3A is displayed in the graphical user interface. The data visualization is displayed according to the natural language input (e.g., the bar chart illustrates the Number of Records by region, sorted in alphabetical order).

The computing device receives (611) from the user, a second input that modifies the first term in the first phrase. In response to receiving the second input, the computing device updates (614) a second phrase (in the natural language input) based on the second input. In some implementations, the second phrase is updated automatically and without user input. In some implementations, before updating the second phrase, the computing device indicates (e.g., on the graphical user interface) how the second input will update the second phrase. For example, the computing device shows to the user that removing a first phrase (e.g., "by Country") will cause the computing device to also remove (e.g., automatically) a second phrase (e.g., "sort Country in alphabetical order"). This indication illustrates to the user how different phrases depend on (e.g., affect) each other.

In some implementations, the second input includes (612) a second term to replace the first term. In some implementations, updating the second phrase based on the second term removes (622) a third term from the second phrase and adds the second term to the second phrase to replace the third term. For example, the computing device updates at least a portion of the second phrase to match the change to the first phrase. For example, Figures 3B-3D show a sequence of screen shots for a graphical user interfaces where the first term (e.g., "Region") in the first phrase (e.g., "sort Region in alphabetical order) is modified by replacing the first term with a second term (e.g., "Country"). For example, a user provides the second input (e.g., selects "Country" from a set of terms presented in a dropdown menu) in Figure 3C. The selected second term (e.g., Country) modifies (e.g., replaces) the first term (e.g., Region) in the natural language input. In response to the second input from the user selecting the second term (e.g., "Country") to replace the first term (e.g., "Region") in the first phrase (e.g., "sort Region in alphabetical order"), the computing device updates a second phrase (e.g., "by Region") by removing a third term (e.g., Region) from the second phrase ("by Region") and adding the second term ("Country") to the second phrase to replace the third term (e.g., "by Region" is replaced with "by Country"). Figure 3D illustrates the resulting natural language input, where the second phrase "by Region" has been updated to "by Country" in response to the second input modifying the first phrase to "sort Country in alphabetical order."

In some implementations, the second input removes (613) the first term in the first phrase. In some implementations, updating the second phrase based on the second term removes (624) the second phrase. For example, Figures 3E and 3F illustrate a sequence of screen shots for a graphical user interface where a first term in the first phrase (e.g., the term "Country" in the phrase "by Country") is removed (e.g., as indicated by a user input selecting the "x" next to the phrase, within the phrase text box, to remove the phrase). In some implementations, all of the first phrase (e.g., including the first term) is removed by the second input. In some implementations, in response to removing the first phrase (e.g., "by Country"), the computing device updates the second phrase. For example, the computing device removes the second phrase (e.g., "sort Country in alphabetical order) because the first phrase "by Country" has been removed by the second input.

The computing device performs (616) a lookup in a database to determine that the second phrase is dependent on the first term of the first phrase. Updating the second phrase is performed in accordance with a determination that the second phrase is dependent on the first term of the first phrase. The second phrase is dependent on the first term of the first phrase if modifying the first phrase without modifying the second phrase would raise an error condition. For example, the computing device updates the second phrase so that the updated natural language input can generate a data visualization.

In response to updating the second phrase based on the second input (626), the computing device displays (628), on the graphical user interface, an updated natural language expression that comprises the modified first phrase and the updated second phrase, and displays (630) an updated data visualization representing the updated natural language expression. For example, Figure 3A illustrates an initial data visualization representing the natural language input, showing the number of records by region and Figure 3D illustrates an updated data visualization representing the updated natural language input, showing number of records by country. As another example, Figure 3E illustrates an initial data visualization as a bar chart before the second input and Figure 3F illustrates the updated data visualization (e.g., text table showing "40,660") after the second phrase has been updated in response to the second input.

In some implementations, the second phrase comprises (618) a sub-portion of the first phrase, and updating the second phrase based on the second input comprises updating the sub-portion of the first phrase. For example, the first phrase includes the first term and includes the second phrase. Thus, in response to the second input, the computing device updates another term within the same phrase (e.g., the first phrase).

In some implementations, the first phrase and the second phrase are (620) distinct phrases. For example, the examples described above with reference to Figures 3A - 3F illustrate instances where the first phrase is distinct from the second phrase (e.g., the second phrase is not a sub-portion of the first phrase).

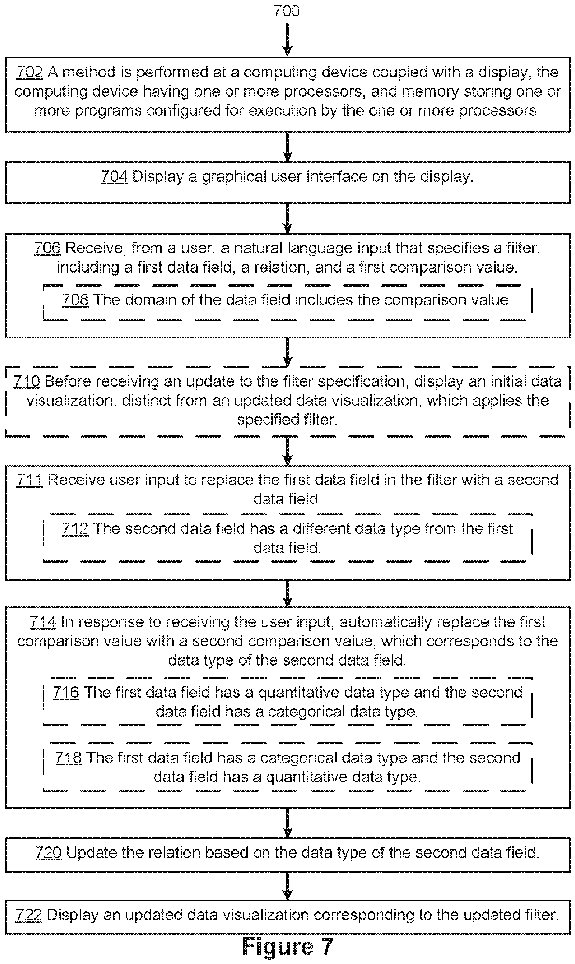

Figure 7 shows a method 700 of updating filter conditions in natural language expressions, not covered by the present claims. The method 700 is also called a process. In some implementations, the method is executed at and performed by a computing device (702) coupled with a display. The computing device has (702) one or more processors and memory. The memory stores one or more programs configured for execution by the one or more processors. The method 700, as performed by a computing device, is optionally governed by instructions that are stored in a non-transitory computer readable storage medium. The instructions are executed by one or more processors of the computing device. Each of the operations shown in Figure 7 may correspond to instructions stored in computer memory or a non-transitory computer readable storage medium (e.g., the memory 214 of a computing device 200). The computer readable storage medium may include a magnetic or optical disk storage device, solid state storage devices such as Flash memory, or other non-volatile memory device or devices. The instructions stored on the computer readable storage medium may include one or more of: source code, assembly language code, object code, or other instruction format that is interpreted by one or more processors. Some operations in the method 700 may be combined and/or the order of some operations may be changed.

In some implementations, the computing device displays (704) a graphical user interface on the display. For example, the computing device displays graphical user interface 100 illustrated in Figure 1.

The computing device receives (706), from a user, a natural language input that specifies a filter, including a first data field, a relation, and a first comparison value. In some implementations, the natural language input is received in a user interface control 120 in the graphical user interface 100. In some implementations, at least a portion of the natural language input is typed by a user. In some implementations, at least a portion of the natural language input is selected, by the user, from a plurality of options provided by the computing device. In some implementations, only a portion of the natural language input is received from the user and the natural language input is automatically completed by the computing device (e.g., the computing device predicts and/or suggests how to complete the natural language input). For example, the user may input the first data field and the computing device automatically generates (e.g., populates) the comparison value based on the first field. For example, the natural language input shown in Figure 5A includes a third phrase 502-3 "with Country in Argentina." The first data field corresponds to "Country" and the comparison value is "Argentina." As explained with reference to Figure 5A, in some implementations, the natural language input matches a natural language template (e.g., to identify the type of filter that being used).

In this example, the domain of the first data field includes (708) the comparison value. For example, the domain of the first data field "Country" consists of country names, including "Argentina."

In some implementations, before receiving an update to the filter specification, the computing device displays (710) an initial data visualization, distinct from an updated data visualization, which applies the specified filter. For example, Figure 5A shows a map data visualization (e.g., partially hidden behind the widget).

The computing device receives (711) user input to replace the first data field in the filter with a second data field. In some instances, the second data field has (712) a different data type from the first data field. For example, as shown in Figure 5B, the user replaces the first data field "Country" 514 with "Population" 534. In this example, the first data field "Country" has a categorical data type (e.g., it is a dimension), but the data field "Population" has a quantitative data type (e.g., it is a measure). Thus, switching from the first data field to the second data field entails changing the type of data from categorical data to quantitative data. It is to be understood that a user input could switch from quantitative data to categorical data as well. In some instances, the user input does not change the data type of data used by the filter. For example, Figures 5C and 5D illustrate the user switching from the data field "Country" to the data field "Continent," both of which have categorical data. In some instances, in accordance with a determination that the switch does not change the type of data, the comparison value is not updated (e.g., the comparison value 556 remains "South" in Figures 5C and 5D). In some instances, when the switch to the data field does not change the type of data, the comparison value is updated to a term that is included in the domain of the second data field. For example, if the data field is switched from "Country" to "Continent," and the initial comparison value was "Argentina" (e.g., a value that is not included in the domain of "Continent") then the updated comparison value is changed to "South America."

In response to receiving the update to the first field, the computing device automatically replaces (714) the first comparison value with the second comparison value. For example, in response to the user input switching from the first data field "Country" to the second data field "Population" in Figures 5A and 5B, the computing device automatically updates the relation from "in" to "at least" 536 and changes "Argentina" to 10,000. Thus, the computing device updates the relation and the comparison value to match the second data field. For example, a user does not manually update the second field corresponding to the filter after changing the first field. This provides for an intuitive method of generating data visualizations that does not require a user to understand the differences between categorical and quantitative filters. Instead, the computing device determines which filter (e.g., quantitative or qualitative) should be applied based on the user's selection of the data field. Thus, if a user switches the data field to be a different data type, the computing device automatically updates the corresponding comparison value to prevent raising an error. In some instances, the first data field has (716) a quantitative data type and the second data field has (716) a categorical data type. In some instances, the first data field has (718) a categorical data type and the second data field has (718) a quantitative data type. For example, Figure 5B illustrates the user switching from a first data field having a categorical data type (e.g., "Country") to a second data field having a quantitative data type (e.g., "Population").

In some instances, switching from the first data field to the second data field also entails changing (720) the relation used by the filter. For example, "contains" is a meaningful relation for a categorical data field, but is not a meaningful relation for a quantitative data field.

In some implementations, the computing device identifies a default value for the comparison value. For example, the computing device selects 10,000 as the default value based on the fact that this number will be compared to average populations. In some implementations, the computing device selects the default value based on information stored in the database and/or the data sources (e.g., using a sampling of data values for the data field). In some implementations, the user updates the default value. In some implementations, the user manually modifies the value in the natural language expression (e.g., changes the filter) after the computing device provides the default value.

The computing device displays (722) an updated data visualization corresponding to the updated filter. For example, Figure 5B illustrates a bar chart data visualization (e.g., partially hidden behind the widget) that filters the data according to the data field "Population" and the comparison value 10,000. As shown in Figures 5A and 5B, the initial data visualization of Figure 5A is different from the updated data visualization of Figure 5B.

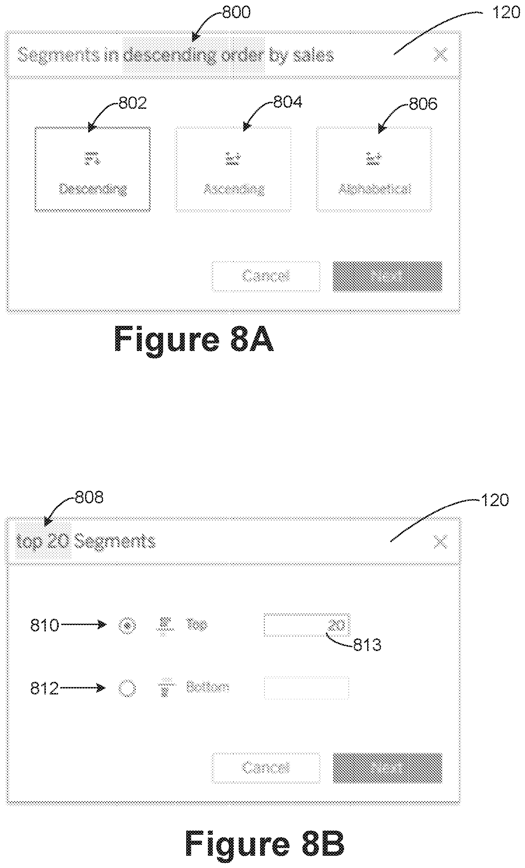

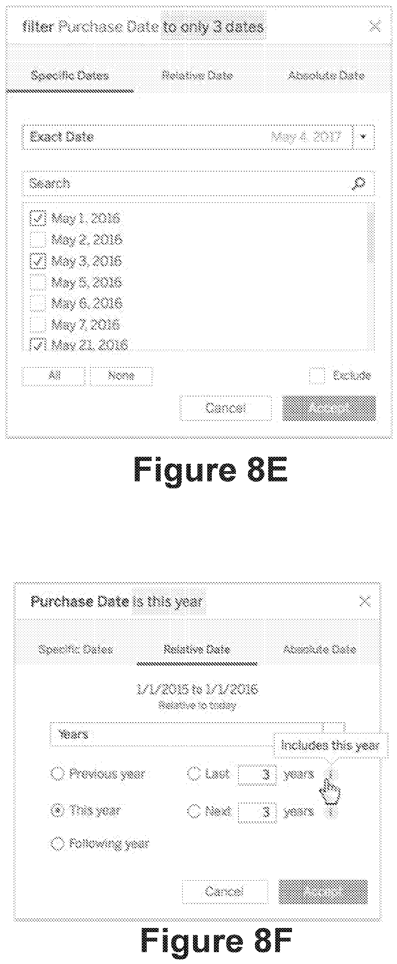

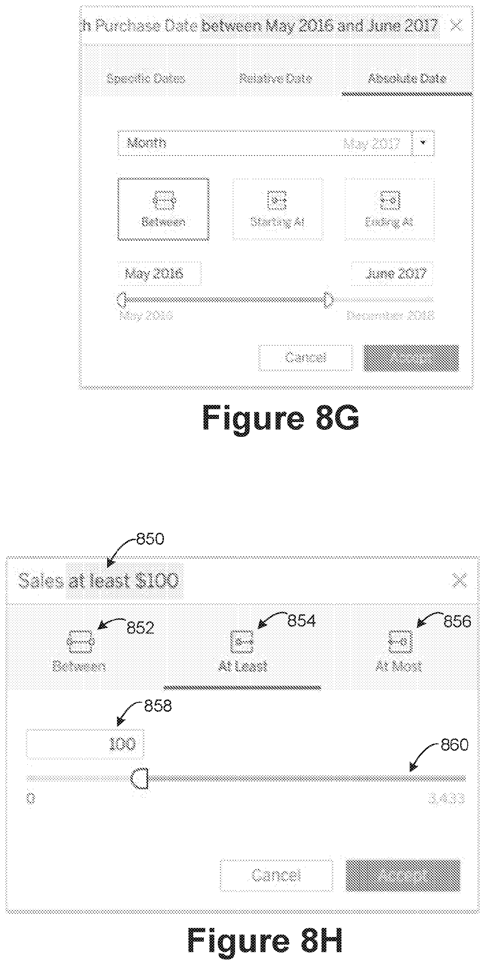

Figures 8A-8J illustrate widgets used in a natural language interfacein accordance with some implementations. For example, the widget generation module 234 dynamically generates widgets to be displayed to the user in graphical user interface 100. The widgets are generated based in part on the natural language input received from the user. The computing device identifies an appropriate widget type based on the selection portion of the natural language input. Thus, the computing device maps a portion of the natural language input to an analytical concept to produce a widget that corresponds to the analytical concept. By dynamically generating the widget based on the natural language input, the user is provided with options to change the data visualization that make sense given the input.

For example, Figure 8A illustrates receiving a natural language input in control 120 that recites "Segments in descending order by sales." The computing device analyzes (e.g., parses) the natural language input and identifies that "descending order" 800 corresponds to an analytical concept of sorting the data (e.g., "Segments"). Thus, the computing device generates a widget that provides the user with a plurality of sort options, including a "descending" option 802, an "ascending" option 804, and an "alphabetical" option 806. In this example, the descending option 802 is selected. Thus, the segments will be sorted in a descending order by sales, as indicated by the natural language input.

Figure 8B illustrates another example of generating a widget. The natural language phrase "top 20 Segments" is received by the computing device. The computing device determines that "top 20" 808 corresponds to an analytical concept of a limit. Thus, the computing device generates a widget that allows a user to input a limit, selecting between a top limit 810 and a bottom limit 812. Because the top limit 810 is selected, the user can enter how many top values in a quantity text box 813. Here, the natural language phase specifies a limit of the top 20. The widget provides a user-friendly way for a user to select and set limits and modify the natural language phrase.

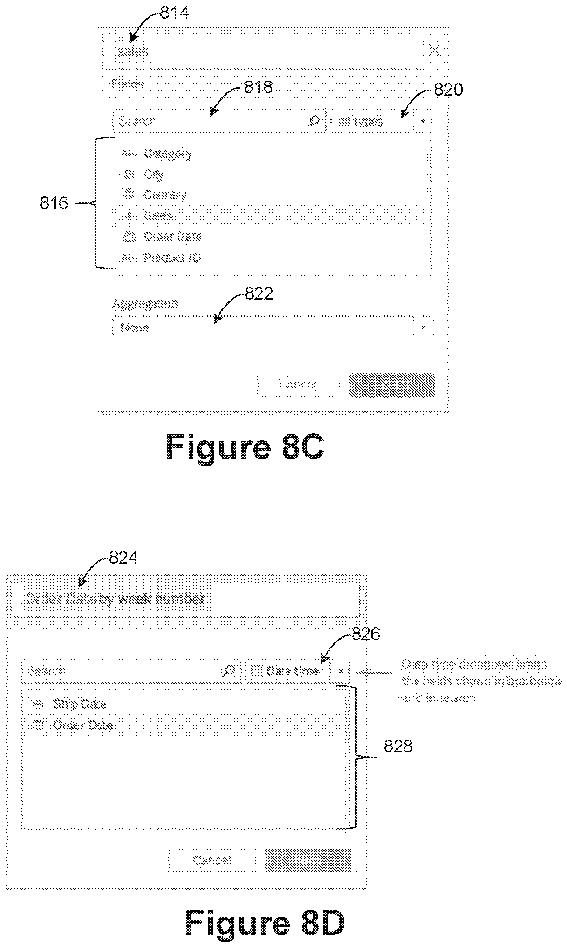

Figure 8C illustrates an example of a fields list widget. For example, the natural language input merely includes the field "sales" 814. In some implementations, the field list widget comprises a scrollable widget that lists, in an area 816, all of the relevant fields, which is dependent on content. The widget includes a search box 818 that allows a user to filter the fields in the list and a data type dropdown 820 to filter the displayed fields according to data type. In some implementations, the widget includes an aggregation dropdown 822, which allows a user to select an aggregation type. For example, quantitative aggregations can specify sum, average, median, count, distinct count, minimum, maximum, or none (no aggregation). Date aggregations can specify year, quarter, quarter name, month, month name, day, day of month, week, week number, weekday, hour, hour of day, minute, minute of hour, second, second of minute, exact date, etc. For example, Figure 8D illustrates that the "Order Date" field 824 can be filtered by "week number." The data type dropdown 826 limits the fields shown in the area 828 and in the search bar.

Figures 8E - 8G are examples of date filter widgets. In some implementations, the widget includes three tabs at the top: specific values, relative date, and absolute date. The widgets shown in Figures 8E - 8G are different interfaces of the widget that appear depending on which tab is selected. Each tab includes a dropdown to specify parameters relevant to the specific type of date filtering.

Figure 8H shows an example of a quantitative filter. For example, the field "at least $100" is parsed by the computing device to correspond to a quantitative filter. In some implementations, the widget includes three options: "between" 852, "at least" 854, and "at most" 856. The widget also includes user interface elements such as a slider 860 (e.g., showing minimum and/or maximum values of the field) and an editable text input box 858.

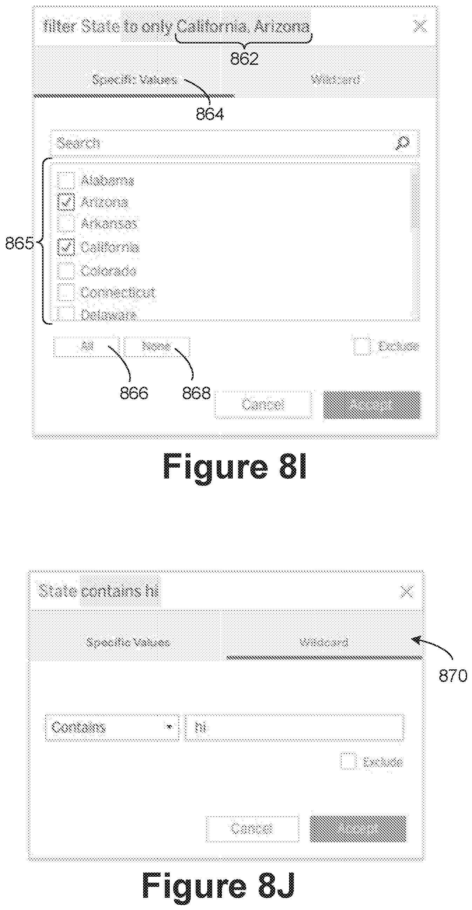

Figures 8I and 8J are examples of non-date categorical filters (e.g., based on the natural language input 862 that corresponds to a categorical filter). In some implementations, the widget has one or more tabs at the top (e.g., Specific Values 864 and Wildcard 870). This widget allows a user to easily select "All" 866 or "None" 868 of the data values displayed in the specific values list 865. In some implementations, in accordance with a determination that the categorical field is a date, the widget also includes options to switch to an Absolute Date Filter or a Relative Date Filter.

The terminology used in the description of the invention herein is for the purpose of describing particular implementations only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain the principles of the invention and its practical applications, to thereby enable others skilled in the art to best utilize the invention and various implementations with various modifications as are suited to the particular use contemplated.

## Claims

1. A method (600), comprising:
at a computing device coupled with a display, the computing device having one or more processors and memory storing one or more programs configured for execution by the one or more processors:
displaying (603) a graphical user interface on the display;
analyzing (604) a natural language input, received from a user, to identify a portion of the natural language input corresponding to a first phrase that includes a first term, and to identify a second portion of the natural language input corresponding to a second phrase; receiving (611), from the user, a second input that modifies the first term in the first phrase;
in response to receiving the second input, performing (616) a lookup in a database to determine that the second phrase is dependent on the first term of the first phrase;
in response to a determination that the second phrase is dependent on the first term of the first phrase, updating (614) the second phrase based on the modification to the first term received in the second input so that an updated natural language expression that comprises the modified first phrase and the updated second phrase is able to be used to generate a data visualization without raising an error condition; and
in response to updating (626) the second phrase based on the second input displaying (628), on the graphical user interface, the updated natural language expression that comprises the modified first phrase and the updated second phrase; and
displaying (630) an updated data visualization representing the updated natural language expression.

2. The method of claim 1, wherein the natural language input is received in a user interface control in the graphical user interface.

3. The method of claim 1, wherein the natural language input includes two or more distinct phrases.

4. The method of claim 1, wherein the second input that modifies the first term in the first phrase includes a second term that replaces the first term in the first phrase and/or comprises removing the first term in the first phrase.

5. The method of claim 1, further comprising:
before receiving the second input, displaying an initial data visualization, distinct from the updated data visualization, according to the first and second phrases.

6. The method of claim 1, wherein the second phrase comprises a sub-portion of the first phrase, and updating the second phrase based on the second input comprises updating the sub-portion of the first phrase.

7. The method of claim 1, wherein the first phrase and the second phrase are distinct phrases.

8. The method of claim 1, wherein updating the second phrase based on the second term comprises at least one of one of:
removing a third term from the second phrase and adding the second term to the second phrase to replace the third term, and
removing the second phrase.

9. A computing device (200), coupled with a display (208), comprising:
one or more processors (202);
memory (214) storing one or more programs configured for execution by the one or more processors (202), the one or more programs including instructions for:
displaying a graphical user interface (100) on the display;
analyzing a natural language input, received from a user, to identify a portion of the natural language input corresponding to a first phrase that includes a first term, and to identify a second portion of the natural language input corresponding to a second phrase;
receiving, from the user, a second input that modifies the first term in the first phrase;
in response to receiving the second input, performing a lookup in a database to determine that the second phrase is dependent on the first term of the first phrase;
in response to a determination that the second phrase is dependent on the first term of the first phrase, updating the second phrase based on the modification to the first term received in the second input so that an updated natural language expression that comprises the modified first phrase and the updated second phrase is able to be used to generate a data visualization without raising an error condition; and
in response to updating the second phrase based on the second input:
displaying, on the graphical user interface, the updated natural language expression that includes the modified first phrase and the updated second phrase; and
displaying an updated data visualization representing the updated natural language expression.

10. The computing device (200) of claim 9, wherein the natural language input includes two or more distinct phrases.

11. The computing device (200) of claim 9, wherein the second input that modifies the first term in the first phrase includes a second term that replaces the first term in the first phrase and/or
comprises removing the first term in the first phrase.

12. The computing device (200) of claim 9, further comprising instructions for:
before receiving the second input, displaying an initial data visualization, distinct from the updated data visualization, according to the first and second phrases.

13. The computing device (200) of claim 9, wherein the second phrase comprises a sub-portion of the first phrase, and updating the second phrase based on the second input comprises updating the sub-portion of the first phrase.

14. The computing device of claim 9, wherein updating the second phrase based on the second term comprises at least one of:
removing a third term from the second phrase and adding the second term to the second phrase to replace the third term, and
removing the second phrase.

15. A non-transitory computer-readable storage medium storing one or more programs configured for execution by the one or more processors, the one or more programs including instructions for:
displaying a graphical user interface on the display;
analyzing a natural language input, received from a user, to identify a portion of the natural language input corresponding to a first phrase that includes a first term, and to identify a second portion of the natural language input corresponding to a second phrase;
receiving, from the user, a second input that modifies the first term in the first phrase;
in response to receiving the second input, performing a lookup in a database to determine that the second phrase is dependent on the first term of the first phrase;
in response to a determination that the second phrase is dependent on the first term of the first phrase, updating the second phrase based on the modification to the first term received in the second input so that an updated natural language expression that comprises the modified first phrase and the updated second phrase is able to be used to generate a data visualization without raising an error condition; and
in response to updating the second phrase based on the second input:
displaying, on the graphical user interface, an updated natural language expression that includes the modified first phrase and the updated second phrase; and
displaying an updated data visualization representing the updated natural language expression.

## Patentansprüche

1. Verfahren (600), das Folgendes umfasst:
in einer mit einer Anzeige gekoppelten Rechenvorrichtung, wobei die Rechenvorrichtung einen oder mehrere Prozessoren sowie einen Speicher, auf dem ein oder mehrere Programme gespeichert sind, die zur Ausführung durch den einen oder die mehreren Prozessoren konfiguriert sind, aufweist:
Anzeigen (603) einer grafischen Benutzeroberfläche auf der Anzeige;
Analysieren (604) einer Eingabe in natürlicher Sprache, die von einem Benutzer empfangen wurde, um einen Abschnitt der Eingabe in natürlicher Sprache, der einer einen ersten Begriff umfassenden ersten Phrase entspricht, zu identifizieren, und einen zweiten Abschnitt der Eingabe in natürlicher Sprache, der einer zweiten Phrase entspricht, zu identifizieren;
Empfangen (611) einer zweiten Eingabe von dem Benutzer, die den ersten Begriff in der ersten Phrase verändert;
als Antwort auf das Empfangen der zweiten Eingabe: Durchführen (616) eines Nachschlagevorgangs in einer Datenbank, um zu bestimmen, dass die zweite Phrase von dem ersten Begriff der ersten Phrase abhängig ist;
als Antwort auf das Bestimmen, dass die zweite Phrase von dem ersten Begriff der ersten Phrase abhängig ist: Aktualisieren (614) der zweiten Phrase basierend auf der Veränderung des ersten Begriffs, die in der zweiten Eingabe empfangen wurde, so dass ein aktualisierter Ausdruck in natürlicher Sprache, der die veränderte erste Phrase und die aktualisierte zweite Phrase umfasst, verwendet werden kann, um eine Datenvisualisierung zu erzeugen, ohne einen Fehlerzustand hervorzurufen; und
als Antwort auf das Aktualisieren (626) der zweiten Phrase basierend auf der zweiten Eingabe: Anzeigen (628) des aktualisierten Ausdrucks in natürlicher Sprache, der die veränderte erste Phrase und die aktualisierte zweite Phrase umfasst, auf der grafischen Benutzeroberfläche; und
Anzeigen (630) einer aktualisierten Datenvisualisierung, die den aktualisierten Ausdruck in natürlicher Sprache darstellt.

2. Verfahren nach Anspruch 1, wobei die Eingabe in natürlicher Sprache in einer Benutzeroberflächensteuerung in der grafischen Benutzeroberfläche empfangen wird.

3. Verfahren nach Anspruch 1, wobei die Eingabe in natürlicher Sprache zwei oder mehr verschiedene Phrasen umfasst.

4. Verfahren nach Anspruch 1, wobei die zweite Eingabe, die den ersten Begriff in der ersten Phrase verändert, einen zweiten Begriff umfasst, der den ersten Begriff in der ersten Phrase ersetzt, und/oder das Entfernen des ersten Begriffs in der ersten Phrase umfasst.

5. Verfahren nach Anspruch 1, ferner Folgendes umfassend:
vor dem Empfangen der zweiten Eingabe: Anzeigen einer anfänglichen Datenvisualisierung, die sich von der aktualisierten Datenvisualisierung unterscheidet, gemäß der ersten und der zweiten Phrase.

6. Verfahren nach Anspruch 1, wobei die zweite Phrase einen Teilabschnitt der ersten Phrase umfasst und das Aktualisieren der zweiten Phrase basierend auf der zweiten Eingabe das Aktualisieren des Teilabschnitts der ersten Phrase umfasst.

7. Verfahren nach Anspruch 1, wobei die erste Phrase und die zweite Phrase verschiedene Phrasen sind.

8. Verfahren nach Anspruch 1, wobei das Aktualisieren der zweiten Phrase basierend auf dem zweiten Begriff zumindest eines aus Folgendem umfasst:
Entfernen eines dritten Begriffs aus der zweiten Phrase und Hinzufügen des zweiten Begriffs zu der zweiten Phrase, um den dritten Begriff zu ersetzen, und
Entfernen der zweiten Phrase.

9. Mit einer Anzeige (208) gekoppelte Rechenvorrichtung (200), die Folgendes umfasst:
einen oder mehrere Prozessoren (202);
einen Speicher (214), auf dem ein oder mehrere Programme gespeichert sind, die zur Ausführung durch den einen oder die mehreren Prozessoren (202) konfiguriert sind, wobei das eine oder die mehreren Programme Befehle für Folgendes umfassen:
Anzeigen einer grafischen Benutzeroberfläche (100) auf der Anzeige;
Analysieren einer Eingabe in natürlicher Sprache, die von einem Benutzer empfangen wurde, um einen Abschnitt der Eingabe in natürlicher Sprache, der einer einen ersten Begriff umfassenden ersten Phrase entspricht, zu identifizieren, und einen zweiten Abschnitt der Eingabe in natürlicher Sprache, der einer zweiten Phrase entspricht, zu identifizieren;
Empfangen einer zweiten Eingabe von dem Benutzer, die den ersten Begriff in der ersten Phrase verändert;
als Antwort auf das Empfangen der zweiten Eingabe: Durchführen eines Nachschlagevorgangs in einer Datenbank, um zu bestimmen, dass die zweite Phrase von dem ersten Begriff der ersten Phrase abhängig ist;
als Antwort auf das Bestimmen, dass die zweite Phrase von dem ersten Begriff der ersten Phrase abhängig ist: Aktualisieren der zweiten Phrase basierend auf der Veränderung des ersten Begriffs, die in der zweiten Eingabe empfangen wurde, so dass ein aktualisierter Ausdruck in natürlicher Sprache, der die veränderte erste Phrase und die aktualisierte zweite Phrase umfasst, verwendet werden kann, um eine Datenvisualisierung zu erzeugen, ohne einen Fehlerzustand hervorzurufen; und
als Antwort auf das Aktualisieren der zweiten Phrase basierend auf der zweiten Eingabe: Anzeigen des aktualisierten Ausdrucks in natürlicher Sprache, der die veränderte erste Phrase und die aktualisierte zweite Phrase umfasst, auf der grafischen Benutzeroberfläche; und
Anzeigen einer aktualisierten Datenvisualisierung, die den aktualisierten Ausdruck in natürlicher Sprache darstellt.

10. Rechenvorrichtung (200) nach Anspruch 9, wobei die Eingabe in natürlicher Sprache zwei oder mehr verschiedene Phrasen umfasst.

11. Rechenvorrichtung (200) nach Anspruch 9, wobei die zweite Eingabe, die den ersten Begriff in der ersten Phrase verändert, einen zweiten Begriff umfasst, der den ersten Begriff in der ersten Phrase ersetzt, und/oder das Entfernen des ersten Begriffs in der ersten Phrase umfasst.

12. Rechenvorrichtung (200) nach Anspruch 9, ferner Befehle für Folgendes umfassend:
vor dem Empfangen der zweiten Eingabe: Anzeigen einer anfänglichen Datenvisualisierung, die sich von der aktualisierten Datenvisualisierung unterscheidet, gemäß der ersten und der zweiten Phrase.

13. Rechenvorrichtung (200) nach Anspruch 9, wobei die zweite Phrase einen Teilabschnitt der ersten Phrase umfasst und das Aktualisieren der zweiten Phrase basierend auf der zweiten Eingabe das Aktualisieren des Teilabschnitts der ersten Phrase umfasst.

14. Rechenvorrichtung nach Anspruch 9, wobei das Aktualisieren der zweiten Phrase basierend auf dem zweiten Begriff zumindest eines aus Folgendem umfasst:
Entfernen eines dritten Begriffs aus der zweiten Phrase und Hinzufügen des zweiten Begriffs zu der zweiten Phrase, um den dritten Begriff zu ersetzen, und
Entfernen der zweiten Phrase.

15. Nichtflüchtiges computerlesbares Speichermedium, auf dem ein oder mehrere Programme gespeichert sind, die zur Ausführung durch den einen oder die mehreren Prozessoren konfiguriert sind, wobei das eine oder die mehreren Programme Befehle für Folgendes umfassen:
Anzeigen einer grafischen Benutzeroberfläche auf der Anzeige;
Analysieren einer Eingabe in natürlicher Sprache, die von einem Benutzer empfangen wurde, um einen Abschnitt der Eingabe in natürlicher Sprache, der einer einen ersten Begriff umfassenden ersten Phrase entspricht, zu identifizieren, und einen zweiten Abschnitt der Eingabe in natürlicher Sprache, der einer zweiten Phrase entspricht, zu identifizieren;
Empfangen einer zweiten Eingabe von dem Benutzer, die den ersten Begriff in der ersten Phrase verändert;
als Antwort auf das Empfangen der zweiten Eingabe: Durchführen eines Nachschlagevorgangs in einer Datenbank, um zu bestimmen, dass die zweite Phrase von dem ersten Begriff der ersten Phrase abhängig ist;
als Antwort auf das Bestimmen, dass die zweite Phrase von dem ersten Begriff der ersten Phrase abhängig ist: Aktualisieren der zweiten Phrase basierend auf der Veränderung des ersten Begriffs, die in der zweiten Eingabe empfangen wurde, so dass ein aktualisierter Ausdruck in natürlicher Sprache, der die veränderte erste Phrase und die aktualisierte zweite Phrase umfasst, verwendet werden kann, um eine Datenvisualisierung zu erzeugen, ohne einen Fehlerzustand hervorzurufen; und
als Antwort auf das Aktualisieren der zweiten Phrase basierend auf der zweiten Eingabe: Anzeigen des aktualisierten Ausdrucks in natürlicher Sprache, der die veränderte erste Phrase und die aktualisierte zweite Phrase umfasst, auf der grafischen Benutzeroberfläche; und
Anzeigen einer aktualisierten Datenvisualisierung, die den aktualisierten Ausdruck in natürlicher Sprache darstellt.

## Revendications

1. Procédé (600), comprenant :
au niveau d'un dispositif informatique couplé à un afficheur, le dispositif informatique présentant un ou plusieurs processeurs et une mémoire stockant un ou plusieurs programmes configurés pour être exécutés par les un ou plusieurs processeurs consistant à :
afficher (603) une interface utilisateur graphique sur l'afficheur ;
analyser (604) une entrée de langage naturel, reçue d'un utilisateur, pour identifier une partie de l'entrée de langage naturel correspondant à une première phrase qui inclut un premier terme, et pour identifier une seconde partie de l'entrée de langage naturel correspondant à une seconde phrase ;
recevoir (611), de l'utilisateur, une seconde entrée qui modifie le premier terme dans la première phrase ;
en réponse à la réception de la seconde entrée, effectuer (616) une recherche dans une base de données pour déterminer que la seconde phrase dépend du premier terme de la première phrase ;
en réponse à une détermination que la seconde phrase dépend du premier terme de la première phrase, mettre à jour (614) la seconde phrase sur la base de la modification du premier terme reçue dans la seconde entrée de sorte qu'une expression de langage naturel mise à jour qui comprend la première phrase modifiée et la seconde phrase mise à jour puisse être utilisée pour générer une visualisation de données sans soulever de condition d'erreur ; et
en réponse à la mise à jour (626) de la seconde phrase sur la base de la seconde entrée :
afficher (628), sur l'interface utilisateur graphique, l'expression de langage naturel mise à jour qui comprend la première phrase modifiée et la seconde phrase mise à jour ; et afficher (630) une visualisation de données mise à jour représentant l'expression de langage naturel mise à jour.

2. Procédé selon la revendication 1, dans lequel l'entrée en langage naturel est reçue dans une commande d'interface utilisateur dans l'interface utilisateur graphique.

3. Procédé selon la revendication 1, dans lequel l'entrée de langage naturel inclut deux ou plusieurs phrases distinctes.

4. Procédé selon la revendication 1, dans lequel la seconde entrée qui modifie le premier terme dans la première phrase inclut un deuxième terme qui remplace le premier terme dans la première phrase et/ou comprend une suppression du premier terme dans la première phrase.

5. Procédé selon la revendication 1, comprenant en outre l'étape consistant à :
avant de recevoir la seconde entrée, afficher une visualisation de données initiale, distincte de la visualisation de données mise à jour, selon les première et seconde phrases.

6. Procédé selon la revendication 1, dans lequel la seconde phrase comprend une sous-partie de la première phrase, et une mise à jour de la seconde phrase sur la base de la seconde entrée comprend une mise à jour de la sous-partie de la première phrase.

7. Procédé selon la revendication 1, dans lequel la première phrase et la seconde phrase sont des phrases distinctes.

8. Procédé selon la revendication 1, dans lequel la mise à jour de la seconde phrase sur la base du second terme comprend au moins une étape parmi :
supprimer un troisième terme de la seconde phrase et ajouter le deuxième terme à la seconde phrase pour remplacer le troisième terme, et
retirer la seconde phrase.

9. Dispositif informatique (200), couplé à un dispositif d'affichage (208), comprenant :
un ou plusieurs processeurs(202) ;
une mémoire (214) stockant un ou plusieurs programmes configurés pour être exécutés par les un ou plusieurs processeurs (202), les un ou plusieurs programmes incluant des instructions pour :
afficher une interface utilisateur graphique (100) sur le dispositif d'affichage ;
analyser une entrée de langage naturel, reçue d'un utilisateur, pour identifier une partie de l'entrée de langage naturel correspondant à une première phrase qui inclut un premier terme, et pour identifier une seconde partie de l'entrée de langage naturel correspondant à une seconde phrase ; recevoir, de l'utilisateur, une seconde entrée qui modifie le premier terme dans la première phrase ;
en réponse à la réception de la seconde entrée, effectuer une recherche dans une base de données pour déterminer que la seconde phrase dépend du premier terme de la première phrase ;
en réponse à une détermination que la seconde phrase dépend du premier terme de la première phrase, mettre à jour la seconde phrase sur la base de la modification du premier terme reçue dans la seconde entrée de sorte qu'une expression de langage naturel mise à jour qui comprend la première phrase modifiée et la seconde phrase mise à jour puisse être utilisée pour générer une visualisation de données sans soulever de condition d'erreur ; et
en réponse à la mise à jour de la seconde phrase sur la base de la seconde entrée :
afficher, sur l'interface utilisateur graphique, l'expression de langage naturel mise à jour qui inclut la première phrase modifiée et la seconde phrase mise à jour ; et
afficher une visualisation de données mise à jour représentant l'expression de langage naturel mise à jour.

10. Dispositif informatique (200) selon la revendication 9, dans lequel l'entrée de langage naturel inclut deux ou phrases distinctes ou plus.

11. Dispositif informatique (200) selon la revendication 9, dans lequel la seconde entrée qui modifie le premier terme dans la première phrase inclut un deuxième terme qui remplace le premier terme dans la première phrase et/ou
Comprend une suppression du premier terme de la première phrase.

12. Dispositif informatique (200) selon la revendication 9, comprenant en outre des instructions pour : avant de recevoir la seconde entrée, afficher une visualisation de données initiale, distincte de la visualisation de données mise à jour, selon les première et seconde phrases.

13. Dispositif informatique (200) selon la revendication 9, dans lequel la seconde phrase comprend une sous-partie de la première phrase, et une mise à jour de la seconde phrase sur la base de la seconde entrée comprend une mise à jour de la sous-partie de la première phrase.

14. Dispositif informatique selon la revendication 9, dans lequel la mise à jour de la seconde phrase sur la base du deuxième terme comprend au moins une étape parmi :
supprimer un troisième terme de la seconde phrase et ajouter le deuxième terme à la seconde phrase pour remplacer le troisième terme, et
retirer la seconde phrase.

15. Support de stockage non transitoire lisible par ordinateur stockant un ou plusieurs programmes configurés pour être exécutés par les un ou plusieurs processeurs, les un ou plusieurs programmes incluant des instructions pour :
afficher une interface utilisateur graphique sur le dispositif d'affichage ;
analyser une entrée de langage naturel, reçue d'un utilisateur, pour identifier une partie de l'entrée de langage naturel correspondant à une première phrase qui inclut un premier terme, et pour identifier une seconde partie de l'entrée de langage naturel correspondant à une seconde phrase ;
recevoir, de l'utilisateur, une seconde entrée qui modifie le premier terme dans la première phrase ;
en réponse à la réception de la seconde entrée, effectuer une recherche dans une base de données pour déterminer que la seconde phrase dépend du premier terme de la première phrase ;
en réponse à une détermination que la seconde phrase dépend du premier terme de la première phrase, mettre à jour la seconde phrase sur la base de la modification du premier terme reçue dans la seconde entrée de sorte qu'une expression de langage naturel mise à jour qui comprend la première phrase modifiée et la seconde phrase mise à jour puisse être utilisée pour générer une visualisation de données sans soulever de condition d'erreur ; et en réponse à la mise à jour de la seconde phrase sur la base de la seconde entrée :
afficher, sur l'interface utilisateur graphique, une expression de langage naturel mise à jour qui inclut la première phrase modifiée et la seconde phrase mise à jour ; et
afficher une visualisation de données mise à jour représentant l'expression de langage naturel mise à jour.
